# EUROPÄISCHE PATENTSCHRIFT

(11) **EP 2 844 065 B1**
(45) Veröffentlichungstag und Bekanntmachung des Hinweises auf die Patenterteilung: **06.01.2021**
(21) Anmeldenummer: 13725927.1
(22) Anmeldetag: 02.05.2013
(51) Int. Cl.: A01N 25/02, A01N 25/04, B65D 23/10, B65D 1/32, B65D 47/06, B65D 47/20, A01P 19/00

(54) **LOCKSTOFFZUSAMMENSETZUNG**
LURE COMPOSITION
COMPOSITION ATTRACTIVE

(30) Priorität: 02.05.2012 DE 102012009211; 25.07.2012 DE 102012014770; 05.11.2012 DE 102012021467
(43) Veröffentlichungstag der Anmeldung: 11.03.2015
(73) Patentinhaber: Attratec GmbH, 63820 Elsenfeld (DE)
(72) Erfinder: SCHNABEL, Gerhard, 63820 Elsenfeld (DE)
(74) Vertreter: Baumann, Rüdiger Walter
(86) Internationale Anmeldenummer: PCT/EP2013/059188
(87) Internationale Veröffentlichungsnummer: WO 2013/164426

(56) Entgegenhaltungen:
- WO-A1-93/06749
- WO-A1-2005/016385
- GB-A- 2 462 530
- US-A- 5 650 185
- US-A1- 2003 124 089
- Effax: "Schweizer-Effax GmbH . Westring 24 . 48356 Nordwalde . www.schweizer-effax.com Katalog 2010/2011", , 1 January 2010 (2010-01-01), XP055360181, Retrieved from the Internet: URL:http://www.eimermacher.at/produkte/Kat alogEffol20082009.pdf [retrieved on 2017-03-29]

## Beschreibung

Die vorliegende Erfindung betrifft Zusammensetzungen zur Anlockung von Tieren. Die erfindungsgemäßen Zusammensetzungen werden von Tieren, z.B. Säugetieren und Vögeln, olfaktorisch wahrgenommen und eignen sich insbesondere zur Anlockung von Wildtieren, z.B. jagdbaren Wildtieren. Die vorliegende Erfindung betrifft zudem die Verwendung der hierin beschriebenen Zusammensetzungen zur Anlockung von Tieren, insbesondere Wildtieren.

Eine Vielzahl von Verbindungen, welche von Tieren, insbesondere Wildtieren, olfaktorisch wahrgenommen werden können und eine anlockende Wirkung auf diese haben, sind bekannt und kommerziell in Form von Zusammensetzungen erhältlich. Solche Verbindungen und Zusammensetzungen werden vor allem als sogenannte Jagdlockstoffe bzw. Jagdlockzusammensetzungen im Jagd- und Forstwesen eingesetzt.

Die aus dem Stand der Technik bekannten und kommerziell erhältlichen Produkte zur Anlockung von Wildtieren enthalten Stoffe oder Stoffzusammensetzungen, wie z.B. Anisöl oder Buchenholzteer. Sie werden u.a. dazu verwendet, um behaartes Wild z.B. Rotwild, Schwarzwild, Rehwild, Fuchs und gefiedertes Wild, z.B. Tauben anzulocken. Das angelockte Wild lässt sich gezielt bejagen.

Bekannte Produkte zur Anlockung von Wildtieren weisen jedoch eine Reihe von Nachteilen für den Anwender und die Umwelt auf.

Im Stand der Technik bekannt sind beispielsweise GB 2462530 A, die ein Lockmittel mit dem die Attraktivität eines von einem Tier aufzunehmenden Futtermittels gesteigert werden soll offenbart. WO2005/016385, die ein Acarizid mit modifizierter Haltbarkeit betrifft. US2003/0124089A1, die ein viskoses Lockmittel auf Basis von Tierurin zeigt. US 5,650,185 und WO93/06749, die jeweils Lebensmittelzusatzstoffe in zerstäubbarer Lösung offenbaren. Bekannt sind zudem Holzteer enthaltende Pflegemittel für Tiere. Die vorliegende Erfindung unterscheidet sich vom Stand der Technik insbesondere dadurch, dass ein Lockmittel zur Anlockung von Wildtiere auf Basis von Holzteer mit zusätzlichen, herkömmliche Holzteerprodukte verbessernden Eigenschaften zur Verfügung gestellt wird.

Zahlreiche kommerziell erhältliche Produkte für die Anlockung von Tieren sind hochviskos, was zu diversen Problemen bei der Anwendung führt. So ist das Ausbringen solcher Produkte aufgrund der Zähigkeit bzw. Klebrigkeit der Zusammensetzungen zeitaufwendig und schwer dosierbar. Zudem sind für die Anwendung häufig Hilfsmittel wie z.B. Pinsel erforderlich, die nach Gebrauch aufwendig gereinigt oder entsorgt werden müssen. Eine zeitaufwendige Anwendung von Lockstoffzusammensetzungen ist vor allem dann unerwünscht, wenn ein schnelles Aufbringen erforderlich ist, um etwa das Verhalten der Tiere nicht nachteilig zu beeinflussen. So können durch eine langandauernde Anwendung Tiere in der Umgebung beunruhigt werden, was zu einem Nachteil für den Anwender führen kann. Zudem führt die Zähigkeit der Produkte auch bei sachgemäßer Anwendung oftmals zu schwer entfernbaren Kontaminationen, z.B. von Kleidung. Da die Viskosität bzw. Zähigkeit dieser Zusammensetzungen bei abnehmender Temperatur zunimmt, ist eine Handhabung zu bestimmten Jahreszeiten kaum mehr möglich. Eine Reihe bekannter Lockstoffzusammensetzungen weist z.B. einen Schmelz- bzw. Erstarrungspunkt bei Temperaturen zwischen ca. -5°C und ca. 20°C auf, weshalb deren Anwendungszeiträume sehr stark begrenzt, bzw. für viele Applikationen gänzlich ungeeignet sind. Ökonomisch und ökologisch nachteilig ist es, dass die Produkte wegen ihrer hohen Viskosität nicht vollständig aus den Verpackungen, z.B. Gebinden, entnommen werden können und diese aufwendig entsorgt werden müssen. Auch bereiten die aus dem Stand der Technik bekannten Lockstoffzusammensetzungen Probleme bei der Lagerung, insbesondere der Langzeitlagerung, da die olfaktorisch wahrnehmbaren und anlockend wirkenden Inhaltsstoffe in diesen Zusammensetzungen nicht stabil formuliert und daher Degradationsprozessen ausgesetzt sind. In der Folge führt eine Langzeitlagerung zu einer Abnahme der Wirkintensität bis hin zur Wirkungslosigkeit.

Schließlich sind die aus dem Stand der Technik bekannten Lockstoffzusammensetzungen nach ihrem Ausbringen empfindlich gegenüber Witterungseinflüssen, wie z.B. Wind, Regen, Luftsauerstoff oder Licht, da die in den Zusammensetzungen enthaltenen olfaktorisch wahrnehmbaren und anlockend wirkenden Inhaltsstoffe aufgrund unzureichenden Schutzes, Hydrolyse- und/oder Oxidationsprozessen ausgesetzt sind, in deren Folge die Wirkintensität schnell nachlässt und daher die Anwendungen in kurzen Zeitintervallen wiederholt werden müssen.

Zudem benötigt eine Reihe bekannter Lockstoffzusammensetzungen einen für viele Anwendungen inakzeptablen Zeitraum bis zum Wirkungseintritt.

Schließlich zeichnen sich einige der bekannten Lockstoffzusammensetzungen durch einen unmittelbar nach ihrer Entnahme aus der Verpackung auftretenden stechenden Geruch aus.

Es besteht daher ein Bedarf an Lockstoffzusammensetzungen mit verbesserten Anwendungs- und Wirkeigenschaften.

Der vorliegenden Erfindung lag die Aufgabe zugrunde, eine Lockstoffzusammensetzung bereitzustellen, welche eine oder mehrere der aus dem Stand der Technik bekannten Nachteile überwindet. Insbesondere war es Aufgabe, Zusammensetzungen für das Anlocken von Tieren, insbesondere Wildtieren, wie z.B. jagdbaren Wildtieren bereitzustellen, die sich durch eine im Vergleich zu bekannten Zusammensetzungen geringe Viskosität und damit verbesserte Anwendungseigenschaften auszeichnen. Weiterhin war es Aufgabe der vorliegenden Erfindung, eine Lockstoffzusammensetzung bereitzustellen, in denen der oder die olfaktorisch wahrnehmbaren und anlockend wirkenden Inhaltsstoffe derart formuliert sind, dass sie zum Einen gegenüber degradierenden Prozessen, z.B. hervorgerufen durch Witterungseinflüsse, stabilisiert sind, wodurch die Wirkeigenschaften insbesondere hinsichtlich der Wirkungsdauer verbessert sind, und/oder zum Anderen geruchsmaskiert sind.

Aufgabe der vorliegenden Erfindung war weiterhin die Bereitstellung eines Verfahrens zur Stabilisierung von olfaktorisch wahrnehmbaren und anlockend wirkenden Inhaltsstoffen in einer Lockstoffzusammensetzung sowie ein Verfahren zur Anlockung von Tieren, insbesondere Wildtieren, z.B. jagdbaren Wildtieren.

Überraschenderweise wurde gefunden, dass die Nachteile bekannter Lockstoffzusammensetzungen ganz oder teilweise überwunden werden können, in dem eine erfindungsgemäße Lockstoffzusammensetzung (A) bereitgestellt wird, umfassend oder bestehend aus mindestens ein Lockstoff (A1), und
mindestens ein Lösungsmittel und/oder Dispergiermittel (A2) und optional mindestens ein Formulierungshilfsstoff (A3).

Die vorliegende Erfindung betrifft weiterhin ein Verfahren zur Herstellung der erfindungsgemäßen Lockstoffzusammensetzung (A), umfassend das Lösen und/oder Dispergieren eines oder mehrerer Lockstoffe (A1) und optional einem oder mehrerer Formulierungshilfsstoffe (A3) in einem oder mehreren Lösungsmitteln und/oder in einem oder mehreren Dispergiermitteln (A2).

Die vorliegende Erfindung betrifft auch ein Verfahren zum Anlocken von Tieren, insbesondere Wildtieren, z.B. jagdbaren Wildtieren, umfassend das Ausbringen einer erfindungsgemäßen Lockstoffzusammensetzung (A1).

Der Begriff "Lockstoffzusammensetzung" oder "Lockstoffformulierung" im Sinne der vorliegenden Erfindung umfasst Zusammensetzungen, welche einen oder mehrere Verbindungen, hierin als "Lockstoff", "Locksubstanz" oder "Lockstoffverbindung" bezeichnet, enthalten, die von einem oder mehreren Tieren bzw. Tierarten olfaktorisch wahrgenommen werden können und aufgrund der Wahrnehmung eine anlockende, d.h. anziehende, attraktive bzw. affine Wirkung auf das eine oder die mehreren Tiere oder Tierarten haben. Eine Lockstoffzusammensetzung oder Lockstoffformulierung kann dabei einen Lockstoff enthalten, der für einzelne Individuen oder die Gesamtheit einer Gruppe von Tieren, z.B. Tiergattung, Tierart, Tierrasse, Tiere eines bestimmten Geschlechts, einer bestimmten Alters- oder Entwicklungsstufe, eines bestimmten physiologischen Zustandes und dergleichen, spezifisch anziehend ist.

"Lockstoff", "Locksubstanz" oder "Lockstoffverbindung" im Sinne der vorliegenden Erfindung umfassen natürliche, naturidentische oder synthetisch erzeugte Einzelverbindungen oder Stoffgemische, wie zum Beispiel Naturstoffisolate, Extrakte, Pflanzenöle, ätherische Öle und dergleichen.

Die Begriffe jagdbare Tiere oder jagdbares Wild im Sinne der vorliegenden Erfindung umfassen sämtliche dem Jagdrecht unterliegenden Tierarten, insbesondere Nieder- und Hochwild, Haarwild, Federwild, Schalenwild, Rotwild, Schwarzwild, Rehwild und Raubwild. Die Erfindung bleibt hierauf nicht beschränkt sondern umfasst auch sämtliche weiteren Tierarten wie Haustiere und sonstige Wildtiere.

Die erfindungsgemäße Lockstoffzusammensetzung (A) umfasst einen oder mehrere Lockstoffe (A1) in bevorzugt gelöster, emulgierter und/oder dispergierter Form. Der mindestens eine Lockstoff (A1) kann jedoch auch in fester Form, z.B. adsorbiert oder absorbiert auf einem festen Träger, oder in teilweise fester Form, z.B. in Form einer ungelösten kristallinen Phase bzw. in Form eines Niederschlags in einer Flüssigkeit, vorliegen.

Die qualitative und quantitative Zusammensetzung der erfindungsgemäßen Lockstoffformulierung kann je nach Einsatzzweck variieren.

Die erfindungsgemäße Lockstoffzusammensetzung (A) enthält mindestens 50 Gew.% Lockstoff (A1), bevorzugt mindestens Gew.% Lösungsmittel und/oder Dispergiermittel (A2) und 0 bis 35 Gew.% Formulierungshilfsstoff (A3), worin die Summe der einzelnen Bestandteile bis zu 100 Gew.% beträgt.

Der mindestens eine Lockstoff (A1) der erfindungsgemäßen Lockstoffzusammensetzung ist ausgewählt aus Buchenholzteer, Eichenholzteer, Tannenholzteer, Kiefernholzteer, Fichtenholzteer, Lärchenholzteer Birkenholzteer, insbesondere Buchenholzteer. Zusätzlich, können enthalten sein: Öle und dessen Bestandteile, bevorzugt Pflanzenöle, besonders bevorzugt ätherische Öle wie z.B. Anisöl, Sternanisöl, Baldrianöl, Zwiebelöl, Zimtöl, Zimtrindenöl, Anethol, Knoblauchöl, Korianderöl, Kreuzkümmelöl, Wacholderöl, Wacholderbeeröl, Muskatnussöl, Fichtennadelöl, Kiefernnadelöl, Mandelöl, Tannennadelöl, und Kombinationen davon.

Pflanzenöle oder pflanzliche Öle als Lockstoffkomponente (A) im Sinne der vorliegenden Erfindung umfassen aus Pflanzen bzw. Pflanzenbestandteilen gewonnene, d. h. isolierte Stoffgemische, deren Hauptkomponente, Fette und/oder Öle sind. Der Begriff umfasst auch solche Stoffgemische, deren Bestandteile nicht ausschließlich natürlicher Herkunft sind, sondern auch Gemische aus einerseits natürlichen und andererseits naturidentischen und/oder synthetischen Verbindungen. Weiterhin umfasst der Begriff auch Stoffgemische, in denen eine oder mehrere der Verbindungen des Pflanzenöls nach deren Gewinnung/Isolation chemisch modifiziert sind. Eine Gruppe pflanzlicher Öle sind ätherische Öle, deren ätherisch wirksame Bestandteile als solche und Kombinationen davon.

Die erfindungsgemäße Lockstoffzusammensetzung kann weiterhin umfassen: Duft- und Aromastoffen wie z.B Zimtaldehyde, Maltol, Ethylmaltol, Furfurylaldehyd, 4-Methoxy-Benzaldehyd, 4-Methoxy-Benzylalkohol, 4-Methoxy-Acetophenon, Putrescin, Kadaverin, primäre, sekundäre oder tertiäre Alkylamine wie z.B. Trimethylamin, Butylacetat, Ethyl-2-methylpentanoat, Ethyl-2-trans-4-cis-decadienoate, Diallyldisulfid, Vanillin, Allicin, 2-Acetylpyrrol, Indol, Scatol, 2-Acetylpyridin, 2-Acetylpyrazin, (E,Z)-1,3,5-Undecatrien, (E)-1,3-Undecadien-5-in, 3-Octanol, 2,6-Dimethyl-2-heptanol, trans-2-Hexen-1-ol, cis-3-Hexen-1-ol, 1-Octen-3-ol, 9-Decen-1-ol, 10-Undecen-1-ol, 3,4,5,6,6,-Pentamethyl-3-hepten-2-ol, 3,4,5,6,6,-Pentamethyl-4-hepten-2-ol, 3,5,6,6-Tetramethyl-4-methylenheptan-2-ol, 2-trans-6-cis-Nonadien-1-ol, 4-Methyl-3-decen-5-ol, Hexanal, Octanal, Nonanal, Decanal, Undecanal, Dodecanal, Tridecanal, 2-Methyldecanal, 2-Methylundecanal, trans-2-Hexanal, cis-Heptanal, 2,6-Dimethyl-5-hepten-1-al, (E)-4-Decenal, 10-Undecenal, 2-Dodecenal, 2,6,10-Trimethyl-5,9-undecadienal, 1,1-Dimethoxy-2,2,5-trimethyl-4-hexen, 3-Hydroxy-2-butanon, 2,3-Butandion, 3,4,5,6,6-Pentamethyl-3-hepten-2-on, 2,4,4,7-Tetramethyl-6-octen-3-on, 2-Methyl-2-pentencarbonsäure [CAS 3142-72-1]; Ethylformiat, cis-3-Hexenylformiat, Ethylacetat, Butylacetat, Isoamylacetat, Hexylacetat, Isononylacetat, trans-2-Hexenylacetat, cis-3-Hexenylacetat, Ethylpropionat, Ethylbutyrat, Butylbutyrat, Isoamylbutyrat, Hexylbutyrat, cis-3-hexenylisobutyrat, Ethylisovalerat, Ethyl-2-methylbutyrat, Ethylhexanoat, Ethyl-2-methylpentanoat, 2-Propenylhexanoat, Ethyloctanoat, Methyl-2-nonenoat, Ethyl-2-trans-4-cis-decadienoat, Methyl-2-octynoat, Methyl-2-nonynoat, Ethyl-3-oxobutanoat, (Z)-3-Hexenylmethylcarbonat, 3-Methylbutyloxy-essigsäureallylester, Allylisothiocyanat, Parmanyl [CAS 142653-61-0], WS 23 [CAS 51115-67-4], Ozonil [CAS 22629-49-8], Myrcen, Ocimen, beta-Farnesen, Geraniol, Nerol, Linalool, Myrcenol, Citronellol, Dihydromyrcenol, Tetrahydrogeraniol, 2,6-Dimethyl-2-octanol, 3,7-Dimethyl-7-methoxyoctan-2-ol, Farnesol, Nerolidol, Citral, Citraldiethylacetal, Citronellal, Laurinal [CAS 107-75-5], Methoxydihydrocitronellal, 2,6,10-Trimethyl-9-undecenal, Geranylaceton, Geranylformiat, Geranylpropionat, Geranylisobutyrat, Geranylisovalerat, Nerylacetat, Linalylformiat, Linalylacetat, Linalylpropionat, Linalylbutyrate, Linalylisobutyrate, Citronellylformiat, Citronellylacetat, Citronellylpropionat, Citronellylisobutyrat, Citronellylisovaleriat, Dihydrmyrcenylacetat, Geranonitril [CAS 5146-66-7], Limonen, gamma-Terpinen, alpha-Phellandren, alpha-Pinen, beta-Pinen, Menthol, Neomenthol, Isomenthol, Neoisomenthol, Isopulegol, (alpha, beta, gamma, delta-) Terpineol, Borneol, Menthon, Isomenthon, Carvon, Camphor, Fenchon, (alpha-, beta-, gamma-)lonon, alpha-Damascon, beta-Damascon, beta-Damascenon, delta-DamasconMenthylacetat, alpha-Terpinylalkohol, Bornylacetat, Isobornylacetat, Empetal [CAS 37677-14-8], Precyclemon [CAS 52474-60-9], Kovalon [31906-04-4], Boronal [CAS 3155-71-3], 2-Pentylcyclopentanon, 2-Heptylcyclopentanon, Veloutone [CAS 65443-14-3], Dihydrojasmon, Cis-Jasmon, Orivon [16587-71-6], Cashmeran [CAS 33704-61-9], Cyclopentadecanon, (Z)-4-Cyclopentadecenon, Muscon, 3-Methylcyclopentadecenon, Cyclohexadecanon, 5-Cyclohexadecen-1-on, (E/Z)-8-Cyclohexadecenon, 9-Cycloheptadecen-1-on, Orbitone [CAS 140194-26-9], Tabanone [CAS 13215-88-8], Trimofix [28371-99-5], 3-Methyl-2-cyclopenten-2-ol-1-on, Kephalis [CAS 36306-87-3], Verdox [CAS 88-41-5], Vertenex [CAS 32210-23-4], Cyclacet [CAS 2500-83-6], Allyl-3-cyclohexylpropionat, Allyl-cylohexyloxyacetat, Methyljasmonat, Methyl-dihydrojasmonat, Benzylalkohol, Phenethylalkohol, Phenethylmethylether, Phenethylisoamylether, 1-Phenylethylalkohol, 3-Phenylpropanol, 2-Methyl-1-phenyl-2-propanol, 3-Phenyl-2-propen-1-ol, Benzaldehyd, Phenylacetaldehyd, Benzaldehyddimethylacetal, Benzaldehyddiethylacetal, Phenylacetaldehyddimethylacetal, Phenylacetaldehyddiethylacetal, 2-Phenylpropanal, 2-Phenylpropanal-dimethylacetal, Cyclamenaldehyd, 2-Methyl-3-(4-tert.-butyl-phenyl)propanal, 2-Methyl-3-[4-(2-methylpropyl)phenyl]propanal, Zimtaldehyd, Zimtalkohol, 2-Pentyl-3-phenyl-2-propanal, alpha-Hexylzimtaldehyd, Acetophenon, 4-Methylacetophenon, 4-Phenyl-2-butanon, Methyl-beta-Naphthylketon, Benzophenon, Benzylacetat, Benzylpropionat, Benzylisovaleriat, Phenethylacetat, Phenethylisobutyrat, 1-Phenethylacetat, Phenylessigsäure, Benzoesäure, Methylbenzoat, Hexylbenzoat, Benzylbenzoat, Ethyl-phenylacetat, Zimtsäuremethylester, Zimtsäurebenzylester, Zimtsäurephenethylester, Musk-keton [CAS 81-14-1], Zimtsäurenitril [CAS 4360-47-8], Traseolide [CAS 68140-48-7], AHTN [CAS 1506-02-1 und 21145-77-7], Celestolide [CAS 13171-00-1], Phantolide [CAS 15323-35-0], Thymol, Anethol, 2-Phenoxyethylisobutyrat, beta-Naphthylmethylester, beta-Naphtylethylester, beta-Naphthylisobutylester, Hydrochiniondimethylether, Isoeugenol, Eugenol, Isoeugenolmethylether, Eugenolmethylether, Eugenylacetat, 2-Ethoxy-5-(1-propenyl)phenol, p-Cresylphenylacetat, 4-Methoxybenzylalcohol, Anisacetat [CAS 104-21-2], 4-Methoxybenzaldehyd, 4-Methoxybenzaldehyddimethylactel, 4-Methoxybenzaldehyddiethylacetal, 2-Methyl-3-(4-methoxyphenyl)propanal, Vanillin, 3,4-Dimethoxybenzaldehyd, Ethylvanillin, Heliotropin, 4-Methoxyacetophenon, 4-(4-Hydroxyphenyl)-2-butanon, Salicylsäuremethylester, Salicylsäureisoamylester, Salicylsäureisoamylester, Salicylsäurehexylester, Salicylsäure-(cis-3-Hexenyl)-ester, Salicylsäure-cyclohexylester, Salicylsäurebenzylester, Salicylsäurephenethylester, Atralon [CAS 4707-47-5], 2-Furfuraldehyd, 2-Acetylfuran, 2-furancarbonsäuremethylester, 2-methylfuran-3-thiol, 2,5,-Dimethyl-3(2H)-furanon, 4-Hydroxy-5-methyl-3(2H)-furanon, 2,5-Diethyltetrahydrofuran, Bis-(2-methyl-3-furyl)-disulfid, 3,5-diisobutyl-[1,2,4]trithiolan, 1,8-Cineol, 4-Methyl-2-(2-methyl-1-propenyl)tetrahydropyran, Menthofuran, 2,5-Dimethyl-4-hydroxy-2H-furan-3-on, Homofuronol [CAS 27538-10-9 und 27538-09-6], Maltol, Ethylmaltol, Florol [CAS 63500-71-0], Jasmal [CAS 18871-14-2], HHCB [CAS 1222-05-5], 2-Butyl-4,4,6-trimethyl-1,3-dioxan, Ysamber K [CAS 70788-30-6], Acetal CD [CAS 29895-73-6], Floropal [CAS 5182-36-5], Magnolan [CAS 27606-09-3], Calone [28940-11-6], Applinal [CAS 6413-10-1], Fragolane [CAS 6290-17-1], Oxane [CAS 59323-76-1], gamma-Octalacton, gamma-Nonalacton, gamma-Decalacton, gamma-Undecalacton, Methyloctalacton [CAS 39212-23-2], Sotolone [CAS 28664-35-9], Abhexon [CAS 698-10-2], delta-Decalacton, delta-Dodecalacton, 15-Pentadecanolid, Habanolide [CAS 34902-57-3], 9-Hexadecen-16-olid [CAS 28645-51-4], Arova N [CAS 54982-83-1], 12-Oxa-16-hexadecanolid [CAS 6707-60-4], MC-5 [CAS 105-95-3], Coumarin, Dihydrocoumarin, 2-Furfurylmercaptan, 2-Acetylpyrrol, 2-Acetyl-3,4-dihydro-5H-pyrrol, Indol, 3-Methylindol, 2-Acetylpyridin, 6-Methylchinolin, 6-Isobutylchinolin, 2-Acetylpyrazin, 2-Methylthio-3methylpyrazin, 2-Methoxy-3-isopropylpyrazin, 2-Methoxy-3-isobutylpyrazin, 2,3-Dimethylpyrazin, Trimethylpyrazin, 3-Ethyl-2,5-dimethylpyrazin, 2-Ethyl-3,5-dimethylpyrazin, 2-Methylquinoxalin, 2,5-Dimethylthiazol, 2-Isobutylthiazol, 4-Methyl-5-thiazoethanol, 2-acetyl-2-thiazolin, 2,4,6-Trimethyl-1,3,5-dithiazin, 2-Isopropyl-4,6-dimethyl-1,3,5-dithiazin, 2-Isobutyl-4,6-dimethyl-1,3,5-dithiazin, 2-Butyl-4,6-dimethyl-1,3,5-dithiazin.

Duft- und Aromastoffe dienen auch dem Zweck der Geruchsmaskierung, um die Anwendung für den Anwender angenehmer zu gestalten und eine Abschreckung des Wildes durch einen zu intensiven Geruch der frisch ausgebrachten Lockstoffzusammensetzung zu vermeiden.

Der mindestens eine Lockstoff (A1) der erfindungsgemäßen Lockstoffzusammensetzung (A) ist in einer bevorzugten Ausführungsform dazu geeignet, Wildtiere, insbesondere Säugetiere wie z.B. Pferd, Bovide wie Rind und Schaf bzw. Ziege, Cervide wie z.B. Rothirsch und Schweine wie z.B. Wildschwein oder auch Hausschwein anzulocken.

Lösungsmittel und/oder Dispergiermittel (A2) zur Lösung und/oder Dispersion des mindestens einen Lockstoffs (A1) sind ausgewählt aus mindestens einem organischen Lösungsmittel und/oder Dispergiermittel mindestens einem wässrigen Lösungsmittel und/oder Dispergiermittel Gemischen aus wässrigem Lösungsmittel und/oder Dispergiermittel und Solubilisatoren und Kombinationen davon.

Organische Lösungsmittel (A2.) der erfindungsgemäßen Lockstoffzusammensetzung (A) weisen neben den oben genannten Löslichkeitseigenschaften mindestens zwei bevorzugt alle der folgenden strukturellen und physikalischen Eigenschaften auf:

Sie enthalten immer mindestens ein Heteroatom aus der Gruppe bestehend aus Sauerstoff, Schwefel und Stickstoff,

Sie weisen einen Schmelzpunkt von 40°C oder weniger, bevorzugt 20°C oder weniger auf,

Sie weisen ein Molgewicht von mindestens 40, bevorzugt von mindestens 60 auf.

Bevorzugte organische Lösungsmittel (A2) der erfindungsgemäßen Lockstoffzusammensetzung (A) weisen neben mindestens einer, bevorzugt aller, der vorstehend genannten Eigenschaften, weiterhin eine der folgenden physikalischen Eigenschaften auf:

Sie weisen einen Siedepunkt von mindestens 30°C, bevorzugt von mindestens 60°C, besonders bevorzugt von mindestens 80°C auf,

Sie weisen immer einen Flammpunkt von mindestens 60°C auf.

Geeignete organische Lösungsmittel (A2) der erfindungsgemäßen Lockstoffzusammensetzung (A) mit den vorstehend genannten Eigenschaften sind ausgewählt aus gesättigten, ein- oder mehrfach ungesättigten, cyclischen oder acyclischen, verzweigten oder unverzweigten, unsubstituierten oder ein- oder mehrfach substituierten Kohlenwasserstoffen, einschließlich aromatischen und heteroaromatischen Verbindungen und Kombinationen davon.

Geeignete organische Lösungsmittel (A2) sind ein- oder mehrfach, bevorzugt mindestens zweifach, substituiert mit bzw. weisen mindestens eine, bevorzugt mindestens zwei, der folgenden funktionellen Gruppen auf: Oxo, Oxy, Hydroxy, Carboxy, Carboxamido, Alkoxy, Alkoxycarbonyl, Carbamoyl, Amino, Imido, Imino, Thioyl, Sulfonyl, Sulfinyl, Sulfo, Sulfanyl, Disulfanyl, Ethergruppe, Estergruppe, Ketogruppe, Aldehydgruppe, Acetalgruppe, Carbonatgruppe, Nitrilgruppe, Sulfidgruppe, Sulfoxidgruppe, Sulfongruppe oder Halogen ausgewählt aus Fluor, Chlor, Brom, Jod.

Bevorzugte organische Lösungsmittel (A2) sind aliphatische Alkohole, wobei der aliphatische Rest linear oder verzweigt oder auch cyclisch bzw. gesättigt oder ungesättigt sein kann, z.B. Glykol, Propylenglykol, Glycerin, Bevorzugte organische Lösungsmittel (A2) sind weiterhin aromatisch Alkohole wie z.B. Benzylalkohol oder 4-Methoxybenzylalkohol

Bevorzugte organische Lösungsmittel (A2) sind weiterhin Etherverbindungen, wie z.B. Alkoxylate wie Polyglykole, polyalkoxylierte Alkohole sowie Polyglycerine.

Bevorzugte organische Lösungsmittel (A2) sind weiterhin Ester, wie z.B. C₈₋₁₈-Fettsäuremethylester, C₈₋₁₈-Fettsäureethylester, substituierte oder unsubstituierte Benzoesäureester wie z.B. Benzoesäuremethylester, Benzoesäureethylester, p-Methoxybenzoesäuremethylester.

Bevorzugte organische Lösungsmittel (A2.) sind weiterhin Aldehyde wie z.B. Decanal, Benzaldehyd, 4-Methoxybenzaldehyd.

Bevorzugte organische Lösungsmittel (A2) sind weiterhin Ketone wie z.B. 4-Methoxy-acetophenon, Acetophenon, .

Bevorzugte organische Lösungsmittel (A2) sind weiterhin Nitrile wie z.B., Benzonitril.

Bevorzugte organische Lösungsmittel (A2) sind weiterhin Amide wie z.B. N-Octylpyrrolidon, Decancarbonsäure-Dimethylamid.

Bevorzugte organische Lösungsmittel (A2) sind weiterhin Acetale wie z.B. Benzaldehyd-Dimethylacetal, 4-Methoxy-Benzaldehyd-Dimethylacetal, Benzaldehyd-Diethylacetal.

Bevorzugute organische Lösemittel sind weiterhin Orthoester.

Bevorzugte organische Lösungsmittel (A2) sind weiterhin Sulfone und Sulfoxide wie z.B. Dimethylsulfon, Sulfolan, Dimethylsulfoxid.

Bevorzugte organische Lösungsmittel (A2) sind weiterhin Carbonate wie z.B. Propylencarbonat, Glycerincarbonat.

Besonders bevorzugte organische Lösungsmittel und/oder Dispergiermittel (A2.) haben zusätzlich mindestens zwei der oben genannten funktionellen Gruppen, wobei es sich um gleichartige oder verschiedene funktionelle Gruppen handeln kann. Beispiele hierfür sind:

Alkoxylate der Formel (I)

R¹-(CR²R³-CR⁴R⁵-O)ₓ-(CR⁶R⁷-CR⁸R⁹-O)_{y}-R¹⁰ (I),

Polygylceride der Formel (II)

R¹¹-(O-CH₂-CHOH-CH₂)_{Z}-OR¹² (II),

Alkoxylierte Glycerin-Derivate der Formel (III),

R¹³-AOᵤBOᵥ-O-CH₂-CH(O-BO_{v'}AO_{u'}-R¹⁴)-CH₂-O-BO_{v"}AO_{u"}-R¹⁵ (III),

Alkoxylierte Derivate von Oligo- bzw. Polyglyceriden,
worin
R¹ ausgewählt ist aus H, (C₁-C₁₈)-Alkyl, (C₂-C₁₈)-Alkenyl, (C₂-C₁₈ )-Alkinyl, (C₁-C₁₈)-Alkoxy, (C₂-C₁₈)-Alkenyloxy, (C₂-C₁₈)-Alkinyloxy, OH, O-CO-(C₁-C₁₈)-Alkyl, O-CO-(C₂-C₁₈)-Alkenyl, O-CO-(C₂-C₁₈)-Alkinyl, CO-O-(C₁-C₁₈)-Alkyl, CO-O-(C₂-C₁₈)-Alkenyl, CO-O-(C₂-C₁₈)-Alkinyl, CO-(C₁-C₁₈)-Alkyl, CO-(C₂-C₁₈)-Alkenyl, CO-(C₂-C₁₈)-Alkinyl,
R², R³, R⁴, R⁵, R⁶, R⁷, R⁸ und R⁹ unabhängig voneinander ausgewählt sind aus: H, (C₁-C₆)-Alkyl, insbesondere H, Methyl und Ethyl,
R¹⁰, R¹¹, R¹², R¹³, R¹⁴ und R¹⁵ unabhängig voneinander ausgewählt sind aus: H, (C₁-C₁₈)-Alkyl, (C₂-C₁₈)-Alkenyl, (C₂-C₁₈)-Alkinyl, CO-O-(C₁-C₁₈ )-Alkyl, CO-O-(C₂-C₁₈)-Alkenyl,-CO-O-(C₂-C₁₈)-Alkinyl, CO-(C₁-C₁₈ )-Alkyl, CO-(C₂-C₁₈)-Alkenyl,-CO-(C₂-C₁₈)-Alkinyl,
AO und BO unabhängig voneinander ausgewählt sind aus CHR¹⁶-CHR¹⁷, wobei sich in einem Molekül AO und BO hinsichtlich der Reste R¹⁶ und/oder R¹⁷ voneinander unterscheiden,
R¹⁶ und R¹⁷ unabhängig voneinander ausgewählt sind aus: H, Methyl oder Ethyl,
X ist 0 bis 100, bevorzugt 0 bis 20,
Y ist 0 bis 100, bevorzugt 0 bis 20,
X+Y ist 1 bis 200, bevorzugt, 1-20,
u,u',u" sind jeweils unabhängig voneinander 0 bis 100, bevorzugt 0 bis 10,
v,v',v" sind jeweils unabhängig voneinander 0 bis 100, bevorzugt jeweils 0 bis 10,
u+u'+u"+v+v'+v" ist 3 bis 30.

Bei den Resten Alkyl, Alkenyl, Alkinyl, Alkoxy, Alkenyloxy sowie Alkinyloxy handelt es sich um verzweigte oder lineare aliphatische Gruppen.

Handelt es sich bei den Lösemitteln um flüssige Copolymere, so können diese als Blockcopoylmere oder als ein Polymer, in dem die einzelnen Monomere statistisch miteinander verknüpft sind, vorliegen.

Besonders bevorzugte organische Lösungsmittel und/oder Dispergiermittel (A2.1) sind ausgewählt aus der Gruppe bestehend aus Diethylenglykol, Triethylenglykol, Methyltriglykol, Methyltetraglykol, Dipropylenglykol, Dipropylenglykolmonomethylether, Polyethylenglykole mit Molmassen bis zu 5000, wie z.B. PEG 100, PEG 200, PEG 400, Polypropylenglykole mit Molmassen bis zu 6000, [(Butoxymethylethoxy)methylethoxy]propan-2-ol, 1-(2-Butoxy-1-methylethoxy)propan-2-ol, Furfurylalkohol und Kombinationen davon.

Bei den optional in der erfindungsgemäßen Lockstoffzusammensetzung (A) enthaltenen Formulierungshilfsstoffen (A3) handelt es sich um dem Fachmann bekannte Inertien, wie zum Beispiel um Stabilisatoren wie UV- bzw. pH-Stabilisatoren oder Antioxidantien, Tensiden wie z.B. Netzmittel, Emulgatoren oder Dispergatoren, Entschäumer, Polymere und Adhäsive, Verdicker, Färbemittel wie Farbstoffe und Pigmente, absortive Träger, adsorbtive Träger Biozide, wie z.B. Fungizide, Bakterizide, Trenn- oder Fließmittel, Hilfsstoffe zur Verbesserung der Regenfestigkeit, sonstige Lösemittel wie z.B. Wasser oder reine Kohlenwasserstoffe, Pheromone oder Pheromonanaloga.

Bevorzugte Formulierungshilfsstoffe sind Stabilisatoren, Antioxidantien, Tenside, Polymere mit einer Molmasse von 1000 bis 1000000, bevorzugt 2000 bis 100000, und a) einer Wasserlöslichkeit von weniger als 0,1 Gew.-%, und/oder b) einer Löslichkeit in mindestens einem aromatischen Lösemittel, wie vorstehend definiert, von mindestens 1 Gew.%., Verdicker, Farbstoffe, Pigmente, Wasser und Kombinationen davon.

Handelt es sich bei dem Formulierungshilfsstoff (A3) um Copolymere, so können diese als Blockcopoylmere oder als Polymere, in dem die einzelnen Monomere statisch miteinander verknüpft sind, vorliegen.

Beispiele für UV-Absorber sind anorganische UV-Absorber wie z.B. Titandioxid, Zinkdioxid und organische UV-Absorber wie z.B. Verbindungen, die unter dem Markennamen Uvinul kommerziell erhältlich sind, z.B. Benzophenon-9, Diethylamino-Hydroxybenzoyl-Hexylbenzoat, Ethylhexyltriazon, Oxybenzon, Octyl-Methoxycinnamat, Octocrylen, Polyethyleneglykol-25-4-Aminobenzoesäure, Benzophenon-4 und Kombinationen davon.

Beispiele für Antioxidantien sind Tocopherole (Vitamin E) wie z.B. D,L-alpha-Tocopherol, Ascorbinsäure, t-Butylhydrochinone (TBHQ), butyliertes Hydroxytoluene und butylierte Hydroxyanisole. Der Gehalt an Antioxidantien in der erfindungsgemäßen Lockstoffzusammensetzung beträgt 1 ppm bis 100000 ppm, bevorzugt 10 ppm bis 20 000 ppm.

Beispiele für Tenside sind Salze wie Alkali-, Erdalkali- oder Ammoniumsalze von Ligninsulfonsäuren, Naphthalinsulfonsäuren, Phenolsulfonsäuren, Dibutylnaphthalinsulfonsäuren, Alkylarylsulfonsäuren, Alkylsulfaten, Alkylsulfonaten, Fettalkoholsulfaten, sulfatierten Fettalkoholglykolethern, weiterhin Kondensationsprodukten aus sulfonierten Naphtalin bzw. Naphthalinprodukten und Formaldehyd, Kondensationsprodukten aus Naphthalin oder Naphthalinsulfonsäure mit Phenol und Formaldehyd, Tributylphenylpolyglycolether wie z.B. Verbindungen, die als Sapogenate der Firma Clariant vertrieben werden, nichtionische Tenside wie z.B. Tristerylphenylpolyglycolether wie z.B. Verbindungen, die als Soprophore der Firma Rhodia vertrieben werden, Fettalkoholalkoxylate wie z.B. Ethylenoxidkonsate, Rhizinusölethoxylate, Alkylpolyglycoside, z.B. Alkylpolyglucoside, polymere Tenside wie z.B. Blockcopolymere des Typs EO-PO , EO-PO-EO oder PO-EO-PO , wobei EO Blöcke aus dem Monomer Ethylenoxid, und PO Blöcke aus dem Monomer Propylenoxid bedeuten. Anstelle von Propylenoxid kann auch Butylenoxid eingesetzt werden.

In Tensiden kann die endständige OH-Gruppe von (Alkyl-)Glykol-Einheiten durch Standardreaktionen weiter modifiziert sein. Durch Sulfatierung bzw. Phosphatierung werden saure Tenside erhalten, die partiell oder vollständig neutralisiert werden können. Die resultierenden Salze - z.B. Alkali- oder Ammoniumsalze - sind ebenfalls geeignete Tenside. Durch Alkylierung wie Methylierung oder Acylierung, z.B. Acetylierung, werden neutrale, entgruppenverschlossene Tenside erhalten.

Beispiele für Entschäumer sind Silikonentschäumer wie z.B. Silikonemulsionen (geeignete Verbndungen werden z.B. unter den Markennamen Silikon® SRE der Firma Wacker oder Rhodorsil® der Firma Rhodia vertrieben), langkettige Alkohole oder Fettsäuren, die auch alkoxyliert insbesondere propoxyliert sein können.

Geeignete Polymere bzw. Adhäsive können eine natürliche oder synthetische Herstellbasis besitzen. Beispiele sind Stärke, Stärkederivate wie z.B. Carboxymethylcellulose, Ethylenoxid-Propylenoxid-Copolymere, Polyvinylalkohole (zum Beispiel Mowiol®4-98, Clariant, Rhodoviol®60-20, Rhone-Poulence), Polyvinylpyrrolidone (Sokalan® HP 50, BASF, Kollidon® 25, BASF, Luvitec® K80, BASF Agrimer® A, ISP Global Techn), Polyacrylate (z.B. Sokalan® PA 110 S, BASF), Polymethylmethacrylate, wasserlösliche Polyolefinderivative z.B. von Polybuten, wie z.B. Copolymere von Buten und Ethylenoxid, oder Copolymere von Polybutylen und Maleinsäureanhydrid und dessen Derivate (wie z.B. Densodrin BA®, BASF), Polystyrol-derivative (wie Copolymere von Styrol und Maleinsäureanhydrid oder dessen Derivate oder Copolymere von Styrol und Acrylsäurederivaten, oder Styrol-Butadien-basierte Latex-Copolymere, wie z.B. Semkote E-125, Uniqema) und Polyethylenamine, Polyethylenamide, Polyethylenimine (wie z.B. Lupasol® , BASF, Polymin®, BASF), Polyurethane (Semkote E-105, Uniqema), Polyvinylacetat und Polyethylenwachs (wie kommerziell erhältliches Poligen® WE 7, BASF).

Bevorzugt sind Ethylenoxid-Propylenoxid-Copolymere, Polyacrylate (wie Sokalan® PA 110 S, BASF), Polymethylmethacrylate, Polystyrolderivative (wie Copolymere von Styrol und Maleinsäureanhydridderivaten oder Copolymere von Styrol und Acrylsäurederivativen, oder Styrol-Butadien-basierte Latex-Copolymere, erhältlich, z.B. unter dem Namen E-125, Uniqema) und Polyethylenwachse (wie z.B. Poligen® WE 7, BASF);

Beispiele für Verdicker (d.h. Hilfsstoffe, die dem Produkt ein pseudo-plastisches Fließverhalten verleihen, d.h. dem Fluid eine hohe Viskosität im Ruhezustand und eine niedrige Viskosität im Bewegungszustand verleihen) sind beispielsweise Polysaccharide oder organisch modifizierte Mineralien bzw. Schichtsilikate wie z.B. Xanthangum (z.B. Kelzan® von Kelco), Rhodopol® 23 (Rhone Poulenc) oder Veegum® (von R.T. Vanderbilt) oder Attaclay® (von Engelhardt) oder Bentonite.

Als Färbemittel eignen sich beispielsweise Pigmente und Farbstoffe. Sowohl Pigmente, die in Wasser schwerlöslich sind, als auch Farbstoffe, die in Lösemitteln wie z.B. Wasser löslich sind, können genutzt werden. Beispiele sind die unter den folgenden Markennamen erhältlichen Verbindungen: Rhodamin B, C.I. Pigment Red 112 und C.I. Solvent Red 1 sowie Pigment Blue 15:4, Pigment Blue 15:3, Pigment Blue 15:2, Pigment Blue 15:1, Pigment Blue 80, Pigment Yellow 1, PigmentYellow 13, Pigment Red 112, Pigment Red 48:2, Pigment Red 48:1, Pigment Red 57:1, Pigment Red 53:1, Pigment Orange 43, Pigment Orange 34, Pigment Orange 5, Pigment Green 36, Pigment Green 7, Pigment White 6, Pigment Brown 25, Basic Violet 10, Basic Violet 49, Acid Red 51, Acid Red 52, Acid Red 14, Acid Blue 9, Acid Yellow 23, Basic Red 10, Basic Red 108 und deren Farbstoffe wie z.B. Disperse Blue 69-0007. Diese Produkte sind kommerziell erhältlich.

Beispiele für geeignete absorptive Träger sind Sipernat 50 oder Sipernat 50S.

Beispiele für Bakterizide sind Proxel® von ICI, Acticide® RS von Thor Chemie, Kathon® MK von Rohm & Haas und Dowicil® von Dow Elanco.

Beispiele für Fließmittel sind Mineralien wie Kaolin und Alumosilikate.

Beispiele für Hilfsstoffe zur Verbesserung der Regenfestigkeit sind Talg, Paraffinwachse und Pflanzenwachse wie Bienen- oder Karnaubawachs.

Beispiele für sonstige Lösemittel sind Wasser, Propan, Butan, Dimethylether, insbesondere Wasser.

Beispiele für Pheromone sind Sexualpheromone wie Androsterol, Androstenon.

Eine bevorzugte Ausführungsform der erfindungsgemäßen Lockstoffzusammensetzung (A) ist dadurch gekennzeichnet, dass die erfindungsgemäßen Lockstoffe (A) frei von Pheromonen und/oder frei von Pheromonanaloga sind, wobei Para- oder Aggregationspheromone nicht von Pheromonen und Pheromonanaloga umfasst sind.

Eine weitere bevorzugte Ausführungsform der erfindungsgemäßen Lockstoffzusammensetzung (A) ist dadurch gekennzeichnet dass, der Gehalt an dem wie vorstehend definierten mindestens einen Lockstoff (A1) 50 Gew.% beträgt, das Lösungsmittel (A2) zur Lösung und/oder Dispersion des mindestens einen Lockstoffs (A1) ausgewählt ist aus mindestens einem wie vorstehend definierten organischen Lösungsmittel (A2), dessen Gehalt in der Lockstoffzusammensetzung (A) mindestens 10% Gew.% beträgt, und optional mindestens einen wie vorstehend definierten Formulierungshilfsstoff (A3) enthält, dessen Gehalt in der Lockstoffzusammensetzung (A) bis zu 35 Gew.% betragen kann, worin der Gehalt an Lockstoff (A1), organischem Lösungsmittel (A2) und Formulierungshilfsstoff (A3) zusammen bis zu 100 Gew.% betragen kann.

Eine weitere bevorzugte Ausführungsform der erfindungsgemäßen Lockstoffzusammensetzung (A) ist dadurch gekennzeichnet, dass der mindestens eine Lockstoff (A1) Holzteer, besonders bevorzugt Buchenholzteer umfasst oder aus diesem besteht, mit einem Gehalt von mindestens 70 Gew.% an der Lockstoffzusammensetzung (A), und das mindestens eine Lösungsmittel (A2), bevorzugt ein wie vorstehend definiertes organisches Lösungsmittel (A2), einen Gehalt an der Lockstoffzusammensetzung (A), von mindestens 10 Gew.%, insbesondere mindestens 15 Gew.% aufweist, und optional mindestens einen wie vorstehend definierten Formulierungshilfsstoff (A3) enthält, dessen Gehalt in der Lockstoffzusammensetzung (A) bis zu 35 Gew.% betragen kann, worin der Gehalt an Lockstoff (A1), Lösungsmittel und/oder Dispergiermittel (A2), und Formulierungshilfsstoff (A3) zusammen bis zu 100 Gew.% betragen kann.

Eine besonders bevorzugte Ausführungsform der erfindungsgemäßen Lockstoffzusammensetzung (A) ist dadurch gekennzeichnet, dass der mindestens eine Lockstoff (A1) umfasst oder besteht aus Holzteer, besonders bevorzugt Buchenholzteer, mit einem Gehalt von mindestens 50 Gew.%, insbesondere mindestens 70 Gew.% an der Lockstoffzusammensetzung (A) und/oder mindestens ein wie hierin definiertes Pflanzenöl insbesondere ein Öl umfassend eine oder mehrere ätherische Substanzen, bevorzugt ein Gemisch aus zwei oder mehrerer Pflanzenölen, besonders bevorzugt ein ein Pflanzenöl enthaltend eine oder mehrere ätherische Substanzen und/oder einen oder mehrere Duft- und Aromastoffen wie hierin definiert, mit einem Gehalt von bis zu 5 Gew.% an der Lockstoffzusammensetzung (A), und das mindestens eine Lösungsmittel und/oder Dispergiermittel (A2) ein wie vorstehend definiertes organisches Lösungsmittel und/oder Dispergiermittel ist, mit einem Gehalt von mindestens 10 Gew.%, insbesondere mindestens 15 Gew.% an der Lockstoffzusammensetzung (A), und optional mindestens einen wie vorstehend definierten Formulierungshilfsstoff (A3) enthält, dessen Gehalt in der Lockstoffzusammensetzung (A) bis zu bis zu 35 Gew.% betragen kann, worin der Gehalt an Lockstoff (A1), organischem Lösungsmittel (A2) und Formulierungshilfsstoff (A3) zusammen bis zu 100 Gew.% betragen kann, worin das organische Lösungsmittel (A2) in dieser Ausführungsform mindestens einen Alkohol umfasst oder aus diesem besteht, und bevorzugt ausgewählt ist aus der Gruppe bestehend aus Diethylengykol, Triethylenglykol, Methyltriethylenglykol, Methyltetraethylenglykol, Dipropylenglykol, Dipropylenglykolmonomethylether, [(Butoxymethylethoxy)methylethoxy]-propan-2-ol, (Butoxymethylethoxy)-propan-2-ol, Furfurylalkohol, und Kombinationen davon ausgewählt ist, und worin die einzelnen Komponenten der Pflanzenöle bzw. ätherischen Öle in weiten Bereichen schwanken können.

Umfasst das organische Lösungsmittel und/oder Dispergiermittel (A2) einen Alkohol wie vorstehend definiert, z.B. einen Alkohol wie in der vorherigen, besonders bevorzugten Ausführungsform definiert, kann Wasser ein weiterer Bestandteil des Lösungsmittels und/oder Dispergiermittels (A) sein. Hierbei kann das Gewichtsverhältnis aus der Summe aller Alkohole zu Wasser in weiten Bereichen schwanken, typischerweise von 1:5 bis 100:1, bevorzugt von 1:1 bis 10:1. Als weitere Lösemittelkomponente können noch weitere Komponenten enthalten sein wie z.B. Ketone oder Ester. Typischerweise beträgt in diesem Fall der Anteil des Lösungsmittels und/oder Dispergiermittels (A) mindestens 10 Gew.%, bevorzugt mindestens 15 Gew.% bezogen auf die Lockstoffzusammensetzung (A).

Der Gehalt an C₁₋₁₀Carbonsäuren umfassend 1-5 Carboxylgruppen (z.B. Ameisensäue, Essigsäure, Propionsäure, Buttersäure, Isobuttersäure) in dem Holzteer, biespielsweise ist kleiner als 10 Gew.%, bevorzugt kleiner als 5 Gew.%, besonders bevorzugt kleiner als 2 Gew.%, insbesondere kleiner als 1 Gew.%, jeweils bezogen auf die Lockstoffzusammensetzung (A).

Daher ist eine weitere bevorzugte Ausführungsform der erfindungsgemäßen Lockstoffzusammensetzung (A) ist dadurch gekennzeichnet, dass der mindestens eine Lockstoff (A1) Holzteer, besonders bevorzugt Buchenholzteer umfasst oder aus diesem besteht, mit einem Gehalt von mindestens 50 Gew.%, insbesondere mindestens 70 Gew.% an der Lockstoffzusammensetzung (A), und das mindestens eine Lösungsmittel und/oder Dispergiermittel (A2) ein wie vorstehend definiertes organisches Lösungsmittel (A2) ist, mit einem Gehalt von mindestens 10 Gew.%, insbesondere mindestens 15 Gew.% an der Lockstoffzusammensetzung (A), und optional mindestens einen wie vorstehend definierten Formulierungshilfsstoff (A3) enthält dessen Gehalt in der Lockstoffzusammensetzung (A) bis zu 35 Gew.% betragen kann, worin der Gehalt an Lockstoff (A1), organischem Lösungsmittel und/oder Dispergiermittel (A2.1) und Formulierungshilfsstoff (A3) zusammen bis zu 100 Gew.% betragen kann, und worin der Gehalt an kurzkettigen organischen Carbonsäuren, d.h. C ₁₋₁₀Carbonsäuren umfassend 1-5 Carboxylgruppen, insbesondere Carbonsäuren aus der Gruppe bestehend aus Ameisensäure, Essigsäure, Propionsäure, Buttersäure und Isobuttersäure, maximal 10 Gew.%, bevorzugt maximal 5 Gew.%, besonders bevorzugt maximal 2 Gew.% und insbesondere maximal 1 Gew.% beträgt, jeweils bezogen auf die Lockstoffzusammensetzung (A).

Eine weitere bevorzugte Ausführungsform der erfindungsgemäßen Lockstoffzusammensetzung (A) ist dadurch gekennzeichnet, dass der mindestens eine Lockstoff (A1) umfasst oder besteht aus:
a) Holzteer, besonders bevorzugt Buchenholzteer, mit einem Gehalt von mindestens 50 Gew.%, insbesondere mindestens 70 Gew.% an der Lockstoffzusammensetzung (A) und
b) mindestens ein Pflanzenöl wie hierin definiert insbesondere ein Öl umfassend eine oder mehrere ätherische Substanzen und/oder einen oder mehrere Duft- und Aromastoffe wie hierin definiert, bevorzugt ein Gemisch aus zwei oder mehreren Pflanzenölen, mit einem Gehalt von bis zu 5 Gew.% an der Lockstoffzusammensetzung (A), und das mindestens eine Lösungsmittel und/oder Dispergiermittel (A2) ein wie vorstehend definiertes organisches Lösungsmittel und/oder Dispergiermittel (A2.1) ist, mit einem Gehalt von 10 Gew.%, insbesondere mindestens 15 Gew.% an der Lockstoffzusammensetzung (A), und optional mindestens einen wie vorstehend definierten Formulierungshilfsstoff (A3) enthält, dessen Gehalt in der Lockstoffzusammensetzung (A) bis zu 35 Gew.% betragen kann, worin der Gehalt an Lockstoff (A1), organischem Lösungsmittel (A2) und Formulierungshilfsstoff (A3) zusammen bis zu 100 Gew.% betragen kann.

Eine besonders bevorzugte Ausführungsform der erfindungsgemäßen Lockstoffzusammensetzung (A) ist dadurch gekennzeichnet, dass der mindestens eine Lockstoff (A1) umfasst oder besteht aus:
a) Holzteer, besonders bevorzugt Buchenholzteer, mit einem Gehalt von mindestens 50 Gew.%, insbesondere mindestens 70 Gew.% an der Lockstoffzusammensetzung (A) und
b) mindestens ein Pflanzenöl wie hierin definiert insbesondere ein Öl umfassend eine oder mehrere ätherische Substanzen und/oder einen oder mehrere Duft- und Aromastoffe wie hierin definiert, bevorzugt ein Gemisch aus zwei oder mehreren Pflanzenölen, mit einem Gehalt von bis zu 5 Gew.% an der Lockstoffzusammensetzung (A), und das mindestens eine Lösungsmittel und/oder Dispergiermittel (A2) ein wie vorstehend definiertes organisches Lösungsmittel und/oder Dispergiermittel (A2) ist, mit einem Gehalt von mindestens 10 Gew.%, insbesondere mindestens 15 Gew.% an der Lockstoffzusammensetzung (A), und optional mindestens einen wie vorstehend definierten Formulierungshilfsstoff (A3) enthält, dessen Gehalt in der Lockstoffzusammensetzung (A) bis zu 35 Gew.% betragen kann, worin der Gehalt an Lockstoff (A1), organischem Lösungsmittel (A2) und Formulierungshilfsstoff (A3) zusammen bis zu 100 Gew.% betragen kann, worin das organische Lösungsmittel und/oder Dispergiermittel (A2) in dieser Ausführungsform mindestens einen Alkohol umfasst oder aus diesem besteht, und bevorzugt ausgewählt ist aus der Gruppe bestehend aus Diethylengykol, Triethylenglykol, Methyltriethylenglykol, Methyltetraethylenglykol, Dipropylenglykol, Dipropylenglykolmonomethylether, [(Butoxymethylethoxy)methylethoxy]-propan-2-ol, (Butoxymethylethoxy)-propan-2-ol, Furfurylalkohol, und Kombinationen davon ausgewählt ist, und worin die einzelnen Komponenten der Pflanzenöle bzw. ätherischen Öle in weiten Bereichen schwanken können, worin der Gehalt an kurzkettigen organischen Carbonsäuren, d.h. C₁₋₁₀Carbonsäuren umfassend 1-5 Carboxylgruppen, insbesondere Carbonsäuren aus der Gruppe bestehend aus Ameisensäure, Essigsäure, Propionsäure, Buttersäure und Isobuttersäure, maximal 10 Gew.%, bevorzugt maximal 5 Gew.%, besonders bevorzugt maximal 2 Gew.% und insbesondere maximal 1 Gew.% beträgt, jeweils bezogen auf die Lockstoffzusammensetzung (A).

In weiteren besonders bevorzugten Ausführungsformen umfassen die hierin definierten Lockstoffzusammensetzungen (A) hierin beschriebene Antioxidantien wie z.B. Tocopherol.

Üblicherweise werden die Komponenten der erfindungsgemäßen Lockstoffe (A) in geeignete Formulierungen überführt, so dass diese einfach handhabbar sind. Geeignete Formulierungen sind flüssige und feste Formulierungen. Geeignete Formulierungstechnologien sind auch solche, die eine kontrollierte bzw. verzögerte Freisetzung der Komponenten (A1) ermöglichen, wie z.B. Kapseln, Mikrokapseln oder Matrixpartikeln.

Geeignete flüssige Formulierungen sind Lösungen, Emulsionen, Dispersionen oder Suspoemulsionen. Dispersionen umfassen auch Dispersionen von Kapseln bzw. Mikrokapseln. Bei den Mikrokapseln kann es sich um Matrixkapseln oder um Schale-Kern-Kapseln handeln. Bevorzugt sind Lösungen und Emulsionen, insbesondere Lösungen. Die Viskosität erfindungsgemäßer flüssiger Lockstoffzusammensetzungen liegt bei einer Temperatur von ca. 20°C in der Regel unterhalb von 5000 cP, bevorzugt unterhalb von 2000 cP, insbesondere unterhalb von 1000 cP.

Lösungen können hergestellt werden, indem Lockmittel bzw. Lockmittelgemische (A1) in ein geeignetes Lösemittel oder Lösemittelgemisch (A2) eingerührt werden. In der Regel erfolgt dies bei Raumtemperatur. Je nach Lösegeschwindigkeit, Ansatzgröße und Viskosität des resultierenden Produktes empfiehlt sich eine Nachrührzeit von bis zu einigen Stunden. Für diese Verfahren sind Standardapparaturen gut geeignet.

Feste Formulierungen lassen sich herstellen, indem zum Beispiel eine Lösung aus Lockmittel(n) (A1) und Lösemittel(n) (A2) auf einen festen, absorptiven Träger aufgezogen wird. Das resultierende Pulver kann dann entweder direkt ausgebracht werden, oder mittels Standardverfahren zum Beispiel zu Granulaten weiterverarbeitet werden. Über Schmelzextrusion mit z.B. Wachsen lassen sich Matrixpartikel herstellen, die eine verzögerte Freisetzung der Komponenten (A1) ermöglichen.

### Beispiele

Die vorliegende Erfindung wird an dem folgenden Beispiel weiter erläutert, ohne auf dieses Beispiel beschränkt zu sein.

### Erfindunasaemäßes Beispiel

720 g Buchenholzteer werden mit Furfurylalkohol so versetzt, dass ein Liter eines erfindungsgemäßen Produktes entsteht. Dieses Lockmittel besitzt selbst bei 0°C noch eine deutlich bessere Fließfähigkeit als reiner Buchenholzteer bei Raumtemperatur. Dadurch kann dieses Produkt selbst bei tiefen Außentemperatur einfach appliziert werden.

### Applikation

Die erfindungsgemäßen Lockstoffzusammensetzungen (A) können an geeigneten Stellen auf geeignete Oberflächen wie z.B. Baumstümpfe oder Bäume aufgebracht werden. Es ist auch möglich die Produkte (A) in die Nähe von Kirrmaterial oder direkt auf Kirrmaterial, wie z.B. Maiskörner, aufzugeben. Die attraktive Wirkung von Produkten (A) auf Tier, z.B. Wildtiere und hierbei besonders jagdbares Wild kann dann direkt oder mittels elektronischer Hilfsmittel wie z.B. Photofallen, beobachtet werden. Auf diese Weise lässt sich der Jagderfolg steigern.

### Verpackung

Vorzugsweise werden erfindungsgemäße Lockstoffzusammensetzungen in Gebinden, insbesondere Kunststoff-Gebinden, verpackt, die eine einfache und ökonomische Handhabung sowie Dosierung ermöglichen.

## Patentansprüche

1. Lockstoffzusammensetzung (A), geeignet zur Anlockung von Wildtieren, insbesondere Säugetieren wie Pferden, Boviden oder Cerviden und/oder Schweinen worin die Lockstoffzusammensetzung
- mindestens 50 Gew.% eines Holzteers, ausgewählt aus der Gruppe bestehend aus Buchenholzteer, Eichenholzteer, Tannenholzteer, Kiefernholzteer, Fichtenholzteer, Lärchenholzteer, Birkenholzteer und Kombinationen davon, bevorzugt Buchenholzteer,
- mindestens ein organisches Lösungsmittel (A2), enthaltend mindestens ein Heteroatom aus der Gruppe Sauerstoff, Schwefel, und Stickstoff, wobei das organische Lösungsmittel einen Flammpunkt von mindestens 60°C aufweist,
umfasst.

2. Lockstoffzusammensetzung (A), nach Anspruch 1, **gekennzeichnet durch**
- mindestens 10 Gew.% des organischen Lösungsmittels (A2).

3. Lockstoffzusammensetzung (A), nach einem der vorhergehenden Ansprüche, **gekennzeichnet, durch**
- 0 bis 35 Gew.% eines Formulierungshilfsstoffes (A3).

4. Lockstoffzusammensetzung (A) gemäß einem der vorangegangen Ansprüche, **dadurch gekennzeichnet, dass** die Zusammensetzung wenigstens einen weiteren Lockstoff (A1) ausgewählt aus der Gruppe bestehend aus Duft- und Aromastoffen, insbesondere Zimtaldehyde, Maltol, Ethylmaltol, Furfurylaldehyd, Anisaldehyd, Putrescin, Kadaverin, primäre, sekundäre oder tertiäre Alkylamine wie z.B. Trimethylamin, Butylacetat, Ethyl-2-methylpentanoat, Ethyl-2-trans-4-cis-decadienoate, Diallyldisulfid, Vanillin, Allicin, 2-Acetylpyrrol, Indol, Scatol, 2-Acetylpyridin, 2-Acetylpyrazin, (E,Z)-1,3,5-Undecatrien, (E)-1,3-Undecadien-5-in, 3-Octanol, 2,6-Dimethyl-2-heptanol, trans-2-Hexen-1-ol, cis-3-Hexen-1-ol, 1-Octen-3-ol, 9-Decen-1-ol, 10-Undecen-1-ol, 3,4,5,6,6,-Pentamethyl-3-hepten-2-ol, 3,4,5,6,6,-Pentamethyl-4-hepten-2-ol, 3,5,6,6-Tetramethyl-4-methylenheptan-2-ol, 2-trans-6-cis-Nonadien-1-ol, 4-Methyl-3-decen-5-ol, Hexanal,, Octanal, Nonanal, Decanal, Undecanal, Dodecanal, Tridecanal, 2-Methyldecanal, 2-Methylundecanal, trans-2-Hexanal, cis-Heptanal, 2,6-Dimethyl-5-hepten-1-al, (E)-4-Decenal, 10-Undecenal, 2-Dodecenal, 2,6,10-Trimethyl-5,9-undecadienal, 1,1-Dimethoxy-2,2,5-trimethyl-4-hexen, 3-Hydroxy-2-butanon, 2,3-Butandion, 3,4,5,6,6-Pentamethyl-3-hepten-2-on, 2,4,4,7-Tetramethyl-6-octen-3-on, 2-Methyl-2-pentencarbonsäure [CAS 3142-72-1]; Ethylformiat, cis-3-Hexenylformiat, Ethylacetat, Butylacetat, Isoamylacetat, Hexylacetat, Isononylacetat, trans-2-Hexenylacetat, cis-3-Hexenylacetat, Ethylpropionat, Ethylbutyrat, Butylbutyrat, Isoamylbutyrat, Hexylbutyrat, cis-3-hexenylisobutyrat, Ethylisovalerat, Ethyl-2-methylbutyrat, Ethylhexanoat, Ethyl-2-methylpentanoat, 2-Propenylhexanoat, Ethyloctanoat, Methyl-2-nonenoat, Ethyl-2-trans-4-cis-decadienoat, Methyl-2-octynoat, Methyl-2-nonynoat, Ethyl-3-oxobutanoat, (Z)-3-Hexenylmethylcarbonat, 3-Methylbutyloxy-essigsäureallylester, Allylisothiocyanat, Parmanyl [CAS 142653-61-0], WS 23 [CAS 51115-67-4], Ozonil [CAS 22629-49-8], Myrcen, Ocimen, beta-Farnesen, Geraniol, Nerol, Linalool, Myrcenol, Citronellol, Dihydromyrcenol, Tetrahydrogeraniol, 2,6-Dimethyl-2-octanol, 3,7-Dimethyl-7-methoxyoctan-2-ol, Farnesol, Nerolidol, Citral, Citraldiethylacetal, Citronellal, Laurinal [CAS 107-75-5], Methoxydihydrocitronellal, 2,6,10-Trimethyl-9-undecenal, Geranylaceton, Geranylformiat, Geranylpropionat, Geranylisobutyrat, Geranylisovalerat, Nerylacetat, Linalylformiat, Linalylacetat, Linalylpropionat, Linalylbutyrate, Linalylisobutyrate, Citronellylformiat, Citronellylacetat, Citronellylpropionat, Citronellylisobutyrat, Citronellylisovaleriat, Dihydrmyrcenylacetat, Geranonitril [CAS 5146-66-7], Limonen, gamma-Terpinen, alpha-Phellandren, alpha-Pinen, beta-Pinen, Menthol, Neomenthol, Isomenthol, Neoisomenthol, Isopulegol, (alpha, beta, gamma, delta-) Terpineol, Borneol, Menthon, Isomenthon, Carvon, Camphor, Fenchon, (alpha-, beta-, gamma-)lonon, alpha-Damascon, beta-Damascon, beta-Damascenon, delta-DamasconMenthylacetat, alpha-Terpinylalkohol, Bornylacetat, Isobornylacetat, Empetal [CAS 37677-14-8], Precyclemon [CAS 52474-60-9], Kovalon [31906-04-4], Boronal [CAS 3155-71-3], 2-Pentylcyclopentanon, 2-Heptylcyclopentanon, Veloutone [CAS 65443-14-3], Dihydrojasmon, Cis-Jasmon, Orivon [16587-71-6], Cashmeran [CAS 33704-61-9], Cyclopentadecanon, (Z)-4-Cyclopentadecenon, Muscon, 3-Methylcyclopentadecenon, Cyclohexadecanon, 5-Cyclohexadecen-1-on, (E/Z)-8-Cyclohexadecenon, 9-Cycloheptadecen-1-on, Orbitone [CAS 140194-26-9], Tabanone [CAS 13215-88-8], Trimofix [28371-99-5], 3-Methyl-2-cyclopenten-2-ol-1-on, Kephalis [CAS 36306-87-3], Verdox [CAS 88-41-5], Vertenex [CAS 32210-23-4], Cyclacet [CAS 2500-83-6], Allyl-3-cyclohexylpropionat, Allyl-cylohexyloxyacetat, Methyljasmonat, Methyl-dihydrojasmonat, Benzylalkohol, Phenethylalkohol, Phenethylmethylether, Phenethylisoamylether, 1-Phenylethylalkohol, 3-Phenylpropanol, 2-Methyl-1-phenyl-2-propanol, 3-Phenyl-2-propen-1-ol, Benzaldehyd, Phenylacetaldehyd, Benzaldehyddimethylacetal, Benzaldehyddiethylacetal, Phenylacetaldehyddimethylacetal, Phenylacetaldehyddiethylacetal, 2-Phenylpropanal, 2-Phenylpropanal-dimethylacetal, Cyclamenaldehyd, 2-Methyl-3-(4-tert.-butyl-phenyl)propanal, 2-Methyl-3-[4-(2-methylpropyl)phenyl]propanal, Zimtaldehyd, Zimtalkohol, 2-Pentyl-3-phenyl-2-propanal, alpha-Hexylzimtaldehyd, Acetophenon, 4-Methylacetophenon, 4-Phenyl-2-butanon, Methyl-beta-Naphthylketon, Benzophenon, Benzylacetat, Benzylpropionat, Benzylisovaleriat, Phenethylacetat, Phenethylisobutyrat, 1-Phenethylacetat, Phenylessigsäure, Benzoesäure, Methylbenzoat, Hexylbenzoat, Benzylbenzoat, Ethyl-phenylacetat, Zimtsäuremethylester, Zimtsäurebenzylester, Zimtsäurephenethylester, Musk-keton [CAS 81-14-1], Zimtsäurenitril [CAS 4360-47-8], Traseolide [CAS 68140-48-7], AHTN [CAS 1506-02-1 und 21145-77-7], Celestolide [CAS 13171-00-1], Phantolide [CAS 15323-35-0], Thymol, Anethol, 2-Phenoxyethylisobutyrat, beta-Naphthylmethylester, beta-Naphtylethylester, beta-Naphthylisobutylester, Hydrochiniondimethylether, Isoeugenol, Eugenol, Isoeugenolmethylether, Eugenolmethylether, Eugenylacetat, 2-Ethoxy-5-(1-propenyl)phenol, p-Cresylphenylacetat, 4-Methoxybenzylalcohol, Anisacetat [CAS 104-21-2], 4-Methoxybenzaldehyd, 4-Methoxybenzaldehyddimethylactel, 4-Methoxybenzaldehyddiethylacetal, 2-Methyl-3-(4-methoxyphenyl)propanal, Vanillin, 3,4-Dimethoxybenzaldehyd, Ethylvanillin, Heliotropin, 4-Methoxyacetophenon, 4-(4-Hydroxyphenyl)-2-butanon, Salicylsäuremethylester, Salicylsäureisoamylester, Salicylsäureisoamylester, Salicylsäurehexylester, Salicylsäure-(cis-3-Hexenyl)-ester, Salicylsäure-cyclohexylester, Salicylsäurebenzylester, Salicylsäurephenethylester, Atralon [CAS 4707-47-5], 2-Furfuraldehyd, 2-Acetylfuran, 2-furancarbonsäuremethylester, 2-methylfuran-3-thiol, 2,5,-Dimethyl-3(2H)-furanon, 4-Hydroxy-5-methyl-3(2H)-furanon, 2,5-Diethyltetrahydrofuran, Bis-(2-methyl-3-furyl)-disulfid, 3,5-diisobutyl-[1,2,4]trithiolan, 1,8-Cineol, 4-Methyl-2-(2-methyl-1-propenyl)tetrahydropyran, Menthofuran, 2,5-Dimethyl-4-hydroxy-2H-furan-3-on, Homofuronol [CAS 27538-10-9 und 27538-09-6], Maltol, Ethylmaltol, Florol [CAS 63500-71-0], Jasmal [CAS 18871-14-2], HHCB [CAS 1222-05-5], 2-Butyl-4,4,6-trimethyl-1,3-dioxan, Ysamber K [CAS 70788-30-6], Acetal CD [CAS 29895-73-6], Floropal [CAS 5182-36-5], Magnolan [CAS 27606-09-3], Calone [28940-11-6], Applinal [CAS 6413-10-1], Fragolane [CAS 6290-17-1], Oxane [CAS 59323-76-1], gamma-Octalacton, gamma-Nonalacton, gamma-Decalacton, gamma-Undecalacton, Methyloctalacton [CAS 39212-23-2], Sotolone [CAS 28664-35-9], Abhexon [CAS 698-10-2], delta-Decalacton, delta-Dodecalacton, 15-Pentadecanolid, Habanolide [CAS 34902-57-3], 9-Hexadecen-16-olid [CAS 28645-51-4], Arova N [CAS 54982-83-1], 12-Oxa-16-hexadecanolid [CAS 6707-60-4], MC-5 [CAS 105-95-3], Coumarin, Dihydrocoumarin, 2-Furfurylmercaptan, 2-Acetylpyrrol, 2-Acetyl-3,4-dihydro-5H-pyrrol, Indol, 3-Methylindol, 2-Acetylpyridin, 6-Methylchinolin, 6-lsobutylchinolin, 2-Acetylpyrazin, 2-Methylthio-3methylpyrazin, 2-Methoxy-3-isopropylpyrazin, 2-Methoxy-3-isobutylpyrazin, 2,3-Dimethylpyrazin, Trimethylpyrazin, 3-Ethyl-2,5-dimethylpyrazin, 2-Ethyl-3,5-dimethylpyrazin, 2-Methylquinoxalin, 2,5-Dimethylthiazol, 2-Isobutylthiazol, 4-Methyl-5-thiazoethanol, 2-acetyl-2-thiazolin, 2,4,6-Trimethyl-1,3,5-dithiazin, 2-Isopropyl-4,6-dimethyl-1,3,5-dithiazin, 2-Isobutyl-4,6-dimethyl-1,3,5-dithiazin, 2-Butyl-4,6-dimethyl-1,3,5-dithiazin umfasst.

5. Lockstoffzusammensetzung (A) gemäß einem der Ansprüche 1 bis 4, **dadurch gekennzeichnet, dass** sie frei oder im Wesentlichen frei von Pheromone und/oder Pheromonanaloga ist.

6. Lockstoffzusammensetzung (A) gemäß einem der Ansprüche 2 bis 5, **dadurch gekennzeichnet, dass** der mindestens eine Formulierungshilfsstoff (A3) ausgewählt ist aus UV-Absorbern, bevorzugt Titandioxid, Zinkdioxid, Benzophenon-9, Diethylamino-Hydroxybenzoyl-Hexylbenzoat, Ethylhexyltriazon, Oxybenzon, Octyl-Methoxycinnamat, Octocrylen, Polyethyleneglykol-25-4-Aminobenzoesäure, Benzophenon-4 und Kombinationen davon, pH-Stabilisatoren, Antioxidantien bevorzugt ausgewählt aus der Gruppe bestehend aus Tocopherol, Ascorbinsäure, t-Butylhydrochinon, butyliertes Hydroxytoluen, butyliertes Hydroxyanisol und Kombinationen davon, Tensiden, Emulgatoren, Dispergatoren, Entschäumern, Adhäsiven, Verdickern, Färbemitteln, absorptiven Trägern, adsorptiven Trägern, Bioziden, Trennmitteln, Fließmitteln, Hilfsstoffen zur Verbesserung der Regenfestigkeit und Kombinationen davon.

7. Lockstoffzusammensetzung (A) nach Anspruch 6, **dadurch gekennzeichnet, dass** der Gehalt an Antioxidantien in der Lockstoffzusammensetzung (A) 10 ppm bis 20 000 ppm beträgt.

8. Lockstoffzusammensetzung (A) nach einem der vorherigen Ansprüche 6 oder 7, umfassend
- mindestens 50 Gew. % Buchenholzteer
- 0 bis 5 Gew.% eines Pflanzenöls oder einer Mischung aus mehreren Pflanzenölen, enthaltend eine oder mehrere ätherische Substanzen und/oder einen oder mehrere Duft- und Aromastoffe
- 10 bis 15 Gew-% des mindestens einen Lösungsmittels (A2),
- 0 bis 35 Gew.% des Formulierungshilfsstoffes (A3), worin der Formulierungshilfsstoff (A3) ein Antioxidans, bevorzugt ausgewählt aus der Gruppe bestehend aus Tocopherol, Ascorbinsäure, t-Butylhydrochinon, butyliertes Hydroxytoluen, butyliertes Hydroxyanisol und Kombinationen davon ist.

9. Lockstoffzusammensetzungen (A) gemäß einem der vorherigen Ansprüche, **dadurch gekennzeichnet dass** die Zusammensetzung als flüssige Formulierung, insbesondere Lösung, Emulsion, Dispersion oder Suspoemulsion, oder feste Formulierung, bevorzugt als Pulver oder Granulat, zur Verfügung gestellt wird.

10. Verfahren zur Herstellung einer Lockstoffzusammensetzung (A) wie in einem der vorherigen Ansprüche definiert, umfassend das teilweise oder vollständige Auflösen und/oder Dispergieren des Holzteers und optional des mindestens einen Lockstoffs (A1) und optional des mindestens einen Formulierungshilfsstoffs (A3) in dem mindestens einen Lösungsmittel und/oder Dispergiermittel (A2).

11. Verfahren zur Stabilisierung oxidationssensitiver Lockstoffverbindungen (A1) in einer Lockstoffzusammensetzung (A) wie in einem der vorhergehenden Ansprüche definiert, umfassend das teilweise oder vollständige Auflösen und/oder Dispergieren mindestens eines oxidationssensitiven Lockstoffs (A1) und mindestens eines Formulierungshilfsstoffs (A3) ausgewählt aus der Gruppe der Antioxidantien, in dem mindestens einen Lösungsmittel und/oder Dispergiermittel (A2).

12. Verfahren zur Anlockung von Wildtieren, insbesondere Säugetieren wie Pferden, Boviden oder Cerviden und/oder Schweinen, umfassend das Ausbringen einer wie in einem der vorhergehenden Ansprüche definierten Lockstoffzusammensetzung (A) in einem Bereich eines Zielortes.

## Claims

1. Lure composition (A) suitable for attracting wild animals, in particular mammals such as horses, bovids or cervids and/or pigs, wherein the lure composition comprises:
- at least 50 % by weight of a wood tar selected from the group consisting of beech wood tar, oak wood tar, fir wood tar, pine wood tar, spruce wood tar, larch wood tar, birch wood tar and combinations thereof, preferably beech wood tar,
- at least one organic solvent (A2) containing at least one heteroatom from the group consisting of oxygen, sulphur and nitrogen, the organic solvent having a flash point of at least 60°C.

2. Lure composition (A), according to claim 1, **characterized by**
- at least 10 % by weight of the organic solvent (A2).

3. Lure composition (A), according to any of the preceding claims, **characterized by**
- 0 to 35 % by weight of a formulation aid (A3).

4. Lure composition (A) according to one of the preceding claims, **characterized in that** the composition contains at least one further lure (A1) selected from the group consisting of fragrances and flavourings, in particular cinnamic aldehydes, maltol, ethyl maltol, furfuryl aldehyde, anisaldehyde, putrescine, cadaverine, primary, secondary or tertiary alkylamines such as trimethylamine, butyl acetate, ethyl 2-methylpentanoate, ethyl 2-trans-4-cis-decadienoate, diallyl disulphide, vanillin, allicin, 2-acetylpyrrole, indole, scatole, 2-acetylpyridine, 2-acetylpyrazine, (E,Z)-1,3,5-undecatriene, (E)-1,3-undecadien-5-in, 3-octanol, 2,6-dimethyl-2-heptanol, trans-2-hexen-1-ol, cis-3-hexen-1-ol, 1-octen-3-ol, 9-decen-1-ol, 10-undecen-1-ol, 3,4,5,6,6,-pentamethyl-3-hepten-2-ol, 3,4,5,6,6,-pentamethyl-4-hepten-2-ol, 3,5,6,6-Tetramethyl-4-methylenheptan-2-ol, 2-trans-6-cis-nonadien-1-ol, 4-methyl-3-decen-5-ol, hexanal, octanal, nonanal, decanal, undecanal, dodecanal, tridecanal, 2-methyldecanal, 2-methylundecanal, trans-2-hexanal, cis-heptanal, 2,6-dimethyl-5-hepten-1-al, (E)-4-decenal, 10-undecenal, 2-dodecenal, 2,6,10-trimethyl-5,9-undecadienal, 1,1-dimethoxy-2,2,5-trimethyl-4-hexene, 3-hydroxy-2-butanone, 2,3-butanedione, 3,4,5,6,6-pentamethyl-3-hepten-2-one, 2,4,4,7-tetramethyl-6-octen-3-one, 2-methyl-2-pentenecarboxylic acid [CAS 3142-72-1]; ethyl formate, cis-3-hexenyl formate, ethyl acetate, butyl acetate, isoamyl acetate, hexyl acetate, isononyl acetate, trans-2-hexenyl acetate, cis-3-hexenyl acetate, ethyl propionate, ethyl butyrate, butyl butyrate, isoamyl butyrate, hexyl butyrate, cis-3-hexenyl isobutyrate, ethyl isovalerate, ethyl 2-methyl butyrate, ethyl hexanoate, ethyl 2-methyl pentanoate, 2-propenyl hexanoate, Ethyloctanoate, methyl 2-nonenoate, ethyl 2-trans-4-cis-decadienoate, methyl 2-octynoate, methyl 2-nonynoate, ethyl 3-oxobutanoate, (Z)-3-hexenyl methyl carbonate, 3-methylbutyloxy acetic acid allyl ester, allyl isothiocyanate, parmanyl [CAS 142653-61-0], WS 23 [CAS 51115-67-4], ozonil [CAS 22629-49-8], myrcene, ocimen, beta-farnesene, geraniol, nerol, linalool, myrcenol, citronellol, dihydromyrcenol, tetrahydrogeraniol, 2,6-dimethyl-2-octanol, 3,7-dimethyl-7-methoxyoctan-2-ol, farnesol, nerolidol, citral, citraldiethyl acetal, citronellal, laurinal [CAS 107-75-5], methoxydihydrocitronellal, 2,6,10-trimethyl-9-undecenal, geranyl acetone, geranyl formate, geranyl propionate, geranyl isobutyrate, geranyl isovalerate, neryl acetate, linalyl formate, linalyl acetate, linalyl propionate, linalyl butyrate, linalyl isobutyrate, citronellyl formate, citronellyl acetate, citronellyl propionate, citronellyl isobutyrate, citronellyl isovalerate, dihydrmyrcenyl acetate, geranonitrile [CAS 5146-66-7], limonene, gamma-terpinene, alpha-phellandrene, alpha-pinene, beta-pinene, menthol, neomenthol, isomenthol, neoisomenthol, isopulegol, (alpha, beta, gamma, delta) terpineol, borneol, menthone, isomenthone, carvone, camphor, fenchone, (alpha, beta, gamma) ionone, alpha-damascon, beta-damascon, beta-damascenone, delta-damascon-menthyl acetate, alpha-terpynyl alcohol, bornyl acetate, isobornyl acetate, empetal [CAS 37677-14-8], precyclemon [CAS 52474-60-9], covalone [31906-04-4], boronal [CAS 3155-71-3], 2-pentylcyclopentanone, 2-heptylcyclopentanone, veloutone [CAS 65443-14-3], dihydrojasmon, cis-jasmon, orivon [16587-71-6], cashmeran [CAS 33704-61-9], cyclopentadecanone, (Z)-4-cyclopentadecenone, muscon, 3-methylcyclopentadecenone, cyclohexadecanone, 5-cyclohexadecen-1-one, (E/Z)-8-cyclohexadecenone, 9-cycloheptadecen-1-one, orbitone [CAS 140194-26-9], tabanone [CAS 13215-88-8], Trimofix [28371-99-5], 3-methyl-2-cyclopenten-2-ol-1-one, Cephalis [CAS 36306-87-3], Verdox [CAS 88-41-5], Vertenex [CAS 32210-23-4], Cyclacet [CAS 2500-83-6], allyl 3-cyclohexyl propionate, allyl cyclohexyloxyacetate, methyl jasmonate, methyl dihydrojasmonate, benzyl alcohol, phenethyl alcohol, phenethyl methyl ether, phenethyl isoamyl ether, 1-phenylethyl alcohol, 3-phenyl propanol, 2-methyl-1-phenyl-2-propanol, 3-phenyl-2-propen-1-ol, benzaldehyde, phenylacetaldehyde, benzaldehyde dimethylacetal, benzaldehyde diethylacetal, phenylacetaldehyde dimethylacetal, phenylacetaldehyde diethylacetal, 2-phenylpropanal, 2-phenylpropanal dimethylacetal, cyclamenaldehyde, 2-methyl-3-(4-tert.- butyl-phenyl) propanal, 2-methyl-3-[4-(2-methylpropyl)phenyl]propanal, cinnamic aldehyde, cinnamic alcohol, 2-pentyl-3-phenyl-2-propanal, alpha-hexyl cinnamic aldehyde, acetophenone, 4-methylacetophenone, 4-phenyl-2-butanone, methyl beta-naphthyl ketone, benzophenone, benzyl acetate, benzyl propionate, benzyl isovalerate, phenethyl acetate, phenethyl isobutyrate, 1-phenethyl acetate, phenylacetic acid, benzoic acid, methyl benzoate, hexyl benzoate, benzyl benzoate, ethyl phenyl acetate, methyl cinnamate, benzyl cinnamate, phenethyl cinnamate, musc-ketone [CAS 81-14-1], cinnamic acid nitrile [CAS 4360-47-8], traseolides [CAS 68140-48-7], AHTN [CAS 1506-02-1 and 21145-77-7], celestolides [CAS 13171-00-1], phantolides [CAS 15323-35-0], thymol, anethole, 2-phenoxyethylisobutyrate, beta-naphthylmethyl ester, beta-naphthylethyl ester, beta-naphthylisobutyl ester, hydrochinion dimethylether, isoeugenol, eugenol, isoeugenolmethylether, eugenolmethylether, eugenyl acetate, 2-ethoxy-5-(1-propenyl)phenol, p-cresylphenylacetat, 4-methoxybenzyl alcohol, anis acetate [CAS 104-21-2], 4-methoxybenzaldehyde, 4-methoxybenzaldehyde dimethylactel, 4-methoxybenzaldehyde diethylacetal, 2-methyl-3-(4-methoxyphenyl)propanal, vanillin, 3,4-dimethoxybenzaldehyde, ethylvanillin, heliotropin, 4-methoxyacetophenone, 4-(4-hydroxyphenyl)-2-butanone, methyl salicylic acid ester, Salicylic acid isoamyl ester, salicylic acid isoamyl ester, salicylic acid hexyl ester, salicylic acid (cis-3-hexenyl) ester, salicylic acid cyclohexyl ester, salicylic acid benzyl ester, salicylic acid phenethyl ester, Atralon [CAS no. 4707-47-5], 2-furfuraldehyde, 2-acetylfuran, 2-furan carboxylic acid methyl ester, 2-methylfuran-3-thiol, 2,5,-dimethyl-3(2H)-furanone, 4-hydroxy-5-methyl-3(2H)-furanone, 2,5-diethyltetrahydrofuran, bis-(2-methyl-3-furyl)-disulphide, 3,5-diisobutyl-[1,2,4]trithiolane, 1,8-cineol, 4-methyl-2-(2-methyl-1-propenyl)tetrahydropyrane, menthofuran, 2,5-dimethyl-4-hydroxy-2H-furan-3-one, homofuronol [CAS No. 27538-10-9 and 27538-09-6], maltol, ethyl maltol, florol [CAS No 63500-71-0], jasmal [CAS No 18871-14-2], HHCB [CAS-Nr. 1222-05-5], 2-Butyl-4,4,6-trimethyl-1, 3-Dioxan, Ysamber K [CAS-Nr. 70788-30-6], Acetal CD [CAS-Nr. 29895-73-6], Floropal [CAS-Nr. 5182-36-5], Magnolan [CAS-Nr. 27606-09-3], Calone [28940-11-6], Applinal [CAS-Nr. 6413-10-1], Fragolan [CAS-Nr. 6290-17-1], Oxane [CAS-Nr. 59323-76-1], Gamma-octalactone, gamma-nonalactone, gamma-decalactone, gamma-undecalactone, methyloctalactone [CAS 39212-23-2], sotolone [CAS 28664-35-9], abhexone [CAS 698-10-2], delta-decalactone, delta-dodecalactone, 15-pentadecanolide, habanolide [CAS 34902-57-3], 9-hexadecene-16-olide [CAS No. 28645-51-4], Arova N [CAS No 54982-83-1], 12-oxa-16-hexadecanolide [CAS No 6707-60-4], MC-5 [CAS No 105-95-3], coumarin, dihydrocoumarin, 2-furfuryl mercaptan, 2-acetylpyrrole, 2-acetyl-3,4-dihydro-5H-pyrrole, indole, 3-methylindole, 2-acetylpyridine, 6-methylquinoline, 6-isobutylquinoline, 2-acetylpyrazine, 2-methylthio-3methylpyrazine, 2-methoxy-3-isopropylpyrazine, 2-methoxy-3-isobutylpyrazine, 2,3-dimethylpyrazine, trimethylpyrazine, 3-ethyl-2, 5-dimethylpyrazine, 2-ethyl-3,5-dimethylpyrazine, 2-methylquinoxaline, 2,5-dimethylthiazole, 2-isobutylthiazole, 4-methyl-5-thiazoethanol, 2-acetyl-2-thiazoline, 2,4,6-trimethyl-1,3,5-dithiazine, 2-isopropyl-4,6-dimethyl-1,3,5-dithiazine, 2-Isobutyl-4,6-dimethyl-1,3,5-dithiazine, 2-butyl-4,6-dimethyl-1,3,5-dithiazine.

5. Lure composition (A) according to any of claims 1 to 4, **characterized in that** it is free or substantially free of pheromones and/or pheromone analogues.

6. Lure composition (A) according to any one of claims 2 to 5, **characterized in that** the at least one formulation aid (A3) is selected from UV absorbers, preferably titanium dioxide, zinc dioxide, benzophenone-9, diethylamino hydroxybenzoyl hexylbenzoate, ethylhexyltriazone, oxybenzone, octylmethoxycinnamate, octocrylene, polyethyleneglycol-25-4-aminobenzoic acid, benzophenone-4 and combinations thereof, pH stabilizers, Antioxidants preferably selected from the group consisting of tocopherol, ascorbic acid, t-butylhydroquinone, butylated hydroxytoluene, butylated hydroxyanisole and combinations thereof, surfactants, emulsifiers, dispersants, defoamers, adhesives, thickeners, colorants, absorptive carriers, adsorptive carriers, biocides, release agents, flow agents, auxiliaries for improving rain fastness and combinations thereof.

7. Lure composition (A) according to claim 6, **characterized in that** the content of antioxidants in the lure composition (A) is 10 ppm to 20,000 ppm.

8. Lure composition (A) according to any one of claim 6 or 7 above, comprising
- at least 50 % by weight beech wood tar,
- 0 to 5 % by weight of a vegetable oil or a mixture of several vegetable oils containing one or more essential substances and/or one or more perfume and aromatic substances,
- 10 to 15 % by weight of at least one solvent (A2),
- 0 to 35 % by weight of the formulation aid (A3),
wherein the formulation aid (A3) is an antioxidant, preferably selected from the group consisting of tocopherol, ascorbic acid, t-butyl hydroquinone, butylated hydroxytoluene, butylated hydroxyanisole, and combinations thereof.

9. Lure composition (A) according to any of the preceding claims, **characterized in that** the composition is provided as a liquid formulation, in particular solution, emulsion, dispersion or suspension emulsion, or solid formulation, preferably as powder or granules.

10. A method for preparing a lure composition (A) as defined in any of the preceding claims, comprising partially or completely dissolving and/or dispersing the wood tar and optionally the at least one lure (A1) and optionally the at least one formulation aid (A3) in the at least one solvent and/or dispersant (A2).

11. A method for stabilizing oxidation-sensitive lure (A1) in an attractant composition (A) as defined in any of the preceding claims, comprising partially or completely dissolving and/or dispersing at least one oxidation-sensitive lure (A1) and at least one formulation aid (A3) selected from the group of antioxidants, in the at least one solvent and/or dispersant (A2).

12. A method for attracting wild animals, in particular mammals such as horses, bovids or cervids and/or pigs, comprising the application of a lure composition (A), as defined in any of the preceding claims, to an area of a target site.

## Revendications

1. Composition attractive (A) adaptée pour attirer les animaux sauvages, en particulier les mammifères tels que les chevaux, les bovins ou les cervidés et/ou les porcs, dans laquelle la composition attractive comprend
- au moins 50 % en poids d'un goudron de bois choisi dans le groupe constitué par le goudron de hêtre, le goudron de chêne, le goudron de sapin, le goudron de pin, le goudron d'épicéa, le goudron de mélèze, le goudron de bouleau et leurs combinaisons, de préférence le goudron de hêtre,
- au moins un solvant organique (A2) contenant au moins un hétéroatome du groupe constitué par l'oxygène, le soufre et l'azote, le solvant organique ayant un point d'éclair d'au moins 60°C.

2. Composition attractive (A), selon la revendication 1, **caractérisée par**
- au moins 10 % en poids du solvant organique (A2).

3. Composition attractive (A), selon l'une des revendications précédentes, **caractérisée par**
- 0 à 35 % en poids d'une aide à la formulation (A3).

4. Composition attractive (A) selon l'une des revendications précédentes, **caractérisée en ce que** la composition contient au moins un autre attractant (A1) choisi dans le groupe constitué par les parfums et les arômes, en particulier les aldéhydes cinnamiques, le maltol, le maltol éthylique, l'aldéhyde furfurylique, l'anisaldéhyde, la putrescine, la cadavérine, le primaire, les alkylamines secondaires ou tertiaires telles que la triméthylamine, l'acétate de butyle, le 2-méthylpentanoate d'éthyle, le 2-trans-4-cis-décadiénoate d'éthyle, le disulfure de diallyle, la vanilline, l'allicine, 2-acétylpyrrole, indole, scatole, 2-acétylpyridine, 2-acétylpyrazine, (E,Z)-1,3,5-undécatriène, (E)-1,3-undécadiène-5-in, 3-octanol, 2,6-diméthyl-2-heptanol, trans-2-hexen-1-ol, cis-3-hexen-1-ol, 1-octen-3-ol, 9-decen-1-ol, 10-undecen-1-ol, 3,4,5,6,6,-pentamethyl-3-hepten-2-ol, 3,4,5,6,6,-pentamethyl-4-hepten-2-ol, 3,5,6,6-tetramethyl-4-methylenheptan-2-ol, 2-trans-6-cis-nonadiène-1-ol, 4-méthyl-3-décen-5-ol, hexanal, octanal, nonanal, décanal, undécanal, dodécanal, tridécanal, 2-méthyldécanal, 2-méthylindécanal, trans-2-hexanal, cis-heptanal, 2,6-diméthyl-5-heptène-1-al, (E)-4-décénal, 10-undécénal, 2-dodécénal, 2,6,10-triméthyl-5,9-undécadiénal, 1,1-diméthoxy-2,2,5-triméthyl-4-hexène, 3-hydroxy-2-butanone, 2,3-butanedione, 3,4,5,6,6-pentaméthyl-3-heptène-2-one, 2,4,4,7-tétraméthyl-6-octène-3-one, acide 2-méthyl-2-pentènecarboxylique [CAS 3142-72-1]; formiate d'éthyle, formiate de cis-3-hexényle, acétate d'éthyle, acétate de butyle, acétate d'isoamyle, acétate d'hexyle, acétate d'isononyle, acétate de trans-2-hexényle, acétate de cis-3-hexényle, propionate d'éthyle, butyrate d'éthyle, butyrate de butyle, butyrate d'isoamyle, hexyl butyrate, cis-3-hexényl isobutyrate, isovalérate d'éthyle, 2-méthyl butyrate d'éthyle, hexanoate d'éthyle, 2-méthyl pentanoate d'éthyle, 2-propényle hexanoate, éthyloctanoate, méthyle 2-nonénoate, éthyle 2-trans-4-cis-décadiénoate, 2-octynoate de méthyle, 2-nonynoate de méthyle, 3-oxobutanoate d'éthyle, carbonate de méthyle de (Z)-3-hexényle, ester allylique de l'acide 3-méthylbutyloxyacétique, isothiocyanate d'allyle, parmanyle [CAS 142653-61-0], WS 23 [CAS 51115-67-4], ozonile [CAS 22629-49-8], myrcène, ocimen, bêta-farnésène, géraniol, nérol, linalol, myrcénol, citronellol, dihydromyrcénol, tétrahydrogéraniol, 2,6-diméthyl-2-octanol, 3,7-diméthyl-7-méthoxyoctan-2-ol, farnésol, nérolidol, citral, citraldiéthyl acétal, citronellal, laurinal [CAS 107-75-5], méthoxydihydrocitronellal, 2,6,10-triméthyl-9-undécénal, géranyl acétone, formiate de géranyle, propionate de géranyle, isobutyrate de géranyle, isovalérate de géranyle, acétate de néryle, formiate de linalyle, acétate de linalyle, propionate de linalyle, butyrate de linalyle, isobutyrate de linalyle, formiate de citronellyle, acétate de citronellyle, propionate de citronellyle, isobutyrate de citronellyle, isovalérate de citronellyle, acétate de dihydrmyrcényle, géranonitrile [CAS 5146-66-7], limonène, gamma-terpinène, alpha-phellandrène, alpha-pinène, bêta-pinène, menthol, néomenthol, isomenthol, néoisomenthol, isopulégol, (alpha, bêta, gamma, delta) terpinéol, bornéol, menthone, isomenthone, carvone, camphre, fenchone, (alpha, bêta, gamma) ionone, alpha-damascon, bêta-damascon, bêta-damascénone, acétate de delta-damascon-menthyle, alcool alpha-terpynylique, acétate de bornyle, acétate d'isobornyle, empetal [CAS 37677-14-8], précyclemon [CAS 52474-60-9], covalone [31906-04-4], boronal [CAS 3155-71-3], 2-pentylcyclopentanone, 2-heptylcyclopentanone, veloutone [CAS 65443-14-3], dihydrojasmon, cis-jasmon, orivon [16587-71-6], cashmeran [CAS 33704-61-9], cyclopentadécanone, (Z)-4-cyclopentadécénone, muscon, 3-méthylcyclopentadécénone, cyclohexadécanone, 5-cyclohexadécène-1-one, (E/Z)-8-cyclohexadécénone, 9-cycloheptadécène-1-one, orbitone [CAS 140194-26-9], tabanone [CAS 13215-88-8], Trimofix [28371-99-5], 3-méthyl-2-cyclopentène-2-ol-1-one, Cephalis [CAS 36306-87-3], Verdox [CAS 88-41-5], Vertenex [CAS 32210-23-4], Cyclacét [CAS 2500-83-6], propionate de 3-cyclohexyle d'allyle, cyclohexyloxyacétate d'allyle, jasmonate de méthyle, dihydrojasmonate de méthyle, alcool benzylique, alcool phénéthylique, éther phénéthylméthylique, éther phénéthylisoamylique, alcool 1-phényléthylique, 3-phénylpropanol, 2-méthyl-1-phényl-2-propanol, 3-phényl-2-propène-1-ol, benzaldéhyde, phénylacétaldéhyde, benzaldéhyde diméthylacétal, benzaldéhyde diéthylacétal, phénylacétaldéhyde diméthylacétal, phénylacétaldéhyde diéthylacétal, 2-phénylpropanal, 2-phénylpropanal diméthylacétal, cyclaménaldéhyde, 2-méthyl-3-(4-tert. - butyl-phényl) propanal, 2-méthyl-3-[4-(2-méthylpropyl)phényl]propanal, aldéhyde cinnamique, alcool cinnamique, 2-pentyl-3-phényl-2-propanal, aldéhyde cinnamique alpha-hexylique, acétophénone, 4-méthylacétophénone, 4-phényl-2-butanone, méthylbêta-naphtylcétone, benzophénone, acétate de benzyle, propionate de benzyle, isovalérate de benzyle, acétate de phénéthyle, isobutyrate de phénéthyle, Acétate de 1-phénéthyle, acide phénylacétique, acide benzoïque, benzoate de méthyle, benzoate d'hexyle, benzoate de benzyle, acétate d'éthylphényle, cinnamate de méthyle, cinnamate de benzyle, cinnamate de phénéthyle, musc-cétone [CAS 81-14-1], nitrile de l'acide cinnamique [CAS 4360-47-8], traséolides [CAS 68140-48-7], AHTN [CAS 1506-02-1 et 21145-77-7], célestolides [CAS 13171-00-1], phantolides [CAS 15323-35-0], thymol, anéthole, 2-phénoxyéthylisobutyrate, ester bêta-naphtylméthylique, ester bêta-naphtyléthylique, ester bêta-naphtylisobutylique, hydrochinion dimethylether, isoeugenol, eugenol, isoeugenolmethylether, eugenolmethylether, acétate d'eugényle, 2-éthoxy-5-(1-propényl)phénol, p-crésylphénylacétate, alcool 4-méthoxybenzylique, acétate d'anis [CAS 104-21-2], 4-méthoxybenzaldéhyde, 4-méthoxybenzaldéhyde diméthylactel, 4-méthoxybenzaldéhyde diéthylacétal, 2-méthyl-3-(4-méthoxyphényl)propanal, vanilline, 3,4-diméthoxybenzaldéhyde, éthylvanilline, héliotropine, 4-méthoxyacétophénone, 4-(4-hydroxyphényl)-2-butanone, ester méthylique de l'acide salicylique, ester isoamylique de l'acide salicylique, ester isoamylique de l'acide salicylique, ester hexylique de l'acide salicylique, ester (cis-3-hexényle) de l'acide salicylique, ester cyclohexylique de l'acide salicylique, ester benzylique de l'acide salicylique, ester phénéthylique de l'acide salicylique, Atralon [n° CAS 4707-47-5], 2-furfural, 2-acétylfurane, ester méthylique de l'acide 2-furanne carboxylique, 2-méthylfuranne-3-thiol, 2,5-diméthyl-3(2H)-furanone, 4-hydroxy-5-méthyl-3(2H)-furanone, 2,5-diéthyltétrahydrofurane, bis-(2-méthyl-3-furyl)-disulfure, 3,5-diisobutyl-[1,2,4]trithiolane, 1,8-cinéol, 4-méthyl-2-(2-méthyl-1-propényl)tétrahydropyrane, menthofurane, 2,5-diméthyl-4-hydroxy-2H-furan-3-one, homofuronol [n° CAS 27538-10-9 et 27538-09-6], maltol, éthylmaltol, florol [n° CAS 63500-71-0], jasmin [n° CAS 18871-14-2], HHCB [n° CAS 1222-05-5], 2-Butyl-4,4,6-triméthyl-1, 3-Dioxan, Ysamber K [n° CAS 70788-30-6], Acétal CD [n° CAS 29895-73-6], Floropal [n° CAS 5182-36-5], Magnolan [n° CAS 27606-09-3], Calone [28940-11-6], Applinal [n° CAS 6413-10-1], Fragolan [n° CAS 6290-17-1], Oxane [n° CAS 59323-76-1], Gamma-octalactone, gamma-nonalactone, gamma-décalactone, gamma-undécalactone, méthyloctalactone [n° CAS 39212-23-2], sotolone [n° CAS 28664-35-9], abhexone [CAS 698-10-2], delta-décalactone, delta-dodécalactone, 15-pentadécanolide, habanolide [CAS 34902-57-3], 9-hexadécène-16-olide [n° CAS 28645-51-4], Arova N [n° CAS 54982-83-1], 12-oxa-16-hexadécanolide [n° CAS 6707-60-4], MC-5 [n° CAS 105-95-3], coumarine, dihydro-coumarine, 2-furfuryl mercaptan, 2-acétylpyrrole, 2-acétyl-3, 4-dihydro-5H-pyrrole, in-dole, 3-méthylindole, 2-acétylpyridine, 6-méthylquinoline, 6-isobutylquinoline, 2-acétylpyrazine, 2-méthylthio-3-méthylpyrazine, 2-méthoxy-3-isopropylpyrazine, 2-méthoxy-3-isobutylpyrazine, 2,3-diméthylpyrazine, triméthylpyrazine, 3-éthyl-2, 5-diméthylpyrazine, 2-éthyl-3,5-diméthylpyrazine, 2-méthylquinoxaline, 2,5-diméthylthiazole, 2-isobutylthiazole, 4-méthyl-5-thiazoéthanol, 2-acétyl-2-thiazoline, 2,4,6-triméthyl-1,3,5-dithiazine, 2-isopropyl-4,6-diméthyl-1,3,5-dithiazine, 2-Isobutyl-4,6-diméthyl-1,3,5-dithiazine, 2-butyl-4,6-diméthyl-1,3,5-dithiazine.

5. Composition attractive (A) selon l'une des revendications 1 à 4, **caractérisée en ce qu'**elle est libre ou substantiellement libre de phéromones et/ou d'analogues de phéromones.

6. Composition attractive (A) selon l'une des revendications 2 à 5, **caractérisée en ce que** le au moins un aide à la formulation (A3) est choisi parmi les absorbeurs d'UV, de préférence le dioxyde de titane, le dioxyde de zinc, la benzophénone-9, l'hexylben-zoate de diéthylaminohydroxybenzoyle, l'éthylhexyltriazone, l'oxybenzone, l'octylméthoxycinnamate, l'octocrylène, l'acide polyéthylèneglycol-25-4-aminobenzoïque, la benzophénone-4 et leurs combinaisons, les stabilisateurs de pH, des antioxydants choisis de préférence dans le groupe constitué par le tocophérol, l'acide ascorbique, la t-butylhydroquinone, l'hydroxytoluène butylé, l'hydroxyanisole butylé et leurs combinaisons, des tensioactifs, des émulsifiants, des dispersants, des antimousses, des adhésifs, des épaississants, des colorants, des supports absorbants, des supports adsorbants, des biocides, des agents de démoulage, des agents d'écoulement, des auxiliaires pour améliorer la résistance à la pluie et leurs combinaisons.

7. Composition attractive (A) selon la revendication 6, **caractérisée en ce que** la teneur en antioxydants dans la composition attractive (A) est de 10 ppm à 20 000 ppm.

8. Composition attractive (A) selon l'une des revendications 6 ou 7 ci-dessus, comprenant
- au moins 50 % en poids de goudron de hêtre,
- 0 à 5 % en poids d'une huile végétale ou d'un mélange de plusieurs huiles végétales contenant une ou plusieurs substances essentielles et/ou un ou plusieurs parfums et substances aromatiques,
- 10 à 15 % en poids d'au moins un solvant (A2),
- 0 à 35 % en poids de l'aide à la formulation (A3),
dans laquelle l'aide à la formulation (A3) est un antioxydant, de préférence choisi dans le groupe constitué par le tocophérol, l'acide ascorbique, la t-butylhydroquinone, l'hydroxytoluène butylé, l'hydroxyanisole butylé et leurs combinaisons.

9. Composition attractive (A) selon l'une des revendications précédentes, **caractérisées en ce que** la composition est fournie sous forme de formulation liquide, en particulier en solution, émulsion, dispersion ou émulsion en suspension, ou formulation solide, de préférence sous forme de poudre ou de granulés.

10. Procédé de préparation d'une composition attractive (A) telle que définie dans l'une des revendications précédentes, comprenant la dissolution et/ou la dispersion partielle ou complète du goudron de bois et éventuellement du au moins un attractant (A1) et éventuellement du au moins un aide à la formulation (A3) dans le au moins un solvant et/ou dispersant (A2).

11. Procédé pour stabiliser un attractant sensible à l'oxydation (A1) dans une composition attractive (A) telle que définie dans l'une des revendications précédentes, comprenant la dissolution et/ou la dispersion partielle ou complète d'au moins un attractant sensible à l'oxydation (A1) et d'au moins un aide à la formulation (A3) choisi dans le groupe des antioxydants, dans le au moins un solvant et/ou dispersant (A2).

12. Procédé pour attirer des animaux sauvages, en particulier des mammifères tels que des chevaux, des bovids ou des cervidés et/ou des porcs, comprenant l'application d'une composition attractive (A), telle que définie dans l'une des revendications précédentes, sur une zone d'un site cible.
